# EUROPEAN PATENT APPLICATION

(11) **EP 4 615 129 A1**
(43) Date of publication of application: **10.09.2025**
(21) Application number: 22963779.8
(22) Date of filing: 31.10.2022
(51) Int. Cl.: H04W 72/53

(54) **INFORMATION PROCESSING METHOD AND APPARATUS, INFORMATION SENDING METHOD AND APPARATUS, AND STORAGE MEDIUM**

(71) Applicant: Beijing Xiaomi Mobile Software Co., Ltd., Beijing 100085 (CN)
(72) Inventor: WANG, Lei, Beijing 100085 (CN)
(74) Representative: Hersina, Günter
(86) International application number: PCT/CN2022/128774
(87) International publication number: WO 2024/092460

(57) **Abstract**

Provided in the present disclosure are an information processing method and apparatus, an information sending method and apparatus, and a storage medium. The information processing method comprises: determining a first processing mode for processing first downlink information, wherein resources corresponding to the first downlink information overlap with resources corresponding to a cell-specific reference signal (CRS); and processing the first downlink information on the basis of the first processing mode. By means of the present disclosure, consistent understanding of a base station side and a terminal side can be ensured, and interference between transmission systems in a DSS scenario can also be reduced, thereby improving the corresponding PDCCH transmission efficiency.

## Description

### TECHNICAL FIELD

The disclosure relates to the communication field, in particular to an information processing method and an information processing apparatus, an information sending method and an information sending apparatus, and a storage medium.

### BACKGROUND

At a frequency band where Long Term Evolution (LTE) and New Radio (NR) coexist, when a LTE Cell-specific Reference Signal (CRS) is sent continuously, it may cause serious interference to a NR system.

In order to further improve a resource utilization efficiency of a Physical Downlink Control Channel (PDCCH) in a Dynamic Spectrum Sharing (DSS) scenario, a terminal may support various PDCCH reception mechanisms and may determine one of the reception mechanisms as a mechanism for receiving a PDCCH based on an implementation of the terminal. Similarly, the terminal may also support multiple PDCCH demodulation mechanisms, and may determine one of the demodulation mechanisms as a mechanism for demodulating the PDCCH based on the implementation of the terminal.

However, if the PDCCH reception mechanism or the PDCCH demodulation mechanism is determined by the terminal, a base station cannot determine the mechanisms adopted by the terminal, which may cause an inconsistent understanding between the base station and the terminal, thereby causing resource waste on the base station side.

### SUMMARY

In order to overcome the problems existing in related art, the embodiments of the disclosure provide an information processing method and an information processing apparatus, an information sending method and an information sending apparatus, and a storage medium.

According to a first aspect of embodiments of the disclosure, an information processing method is provided. The method is performed by a terminal and includes:
determining a first processing mode for processing first downlink information, in which resources corresponding to the first downlink information are overlapped with resources corresponding to a CRS; and
processing the first downlink information based on the first processing mode.

Optionally, the first downlink information includes at least one of:
a PDCCH, or
a Demodulation Reference Signal (DMRS) corresponding to the PDCCH, and
the resources corresponding to the first downlink information include:
   resources where PDCCH candidates corresponding to the PDCCH are located.

Optionally, the first downlink information includes the PDCCH, and the first processing mode includes at least one of:
a first receiving mode of receiving the PDCCH only on a first Resource Element (RE), in which the first RE is a RE mapped by the PDCCH but not by the CRS;
a second receiving mode of receiving the PDCCH on the first RE and a second RE, in which the second RE is a RE mapped by the PDCCH and the CRS;
a first demodulation mode of demodulating the PDCCH received only on the first RE; or
a second demodulation mode of demodulating the PDCCH received on the first RE and the second RE.

Optionally, the first downlink information includes the DMRS corresponding to the PDCCH, and the first processing mode includes at least one of:
a third receiving mode of receiving the DMRS only on a third RE, in which the third RE is a RE mapped by the DMRS but not by the CRS;
a fourth receiving mode of receiving the DMRS on the third RE and a fourth RE, in which the fourth RE is a RE mapped by the DMRS and the CRS;
a first channel estimation mode of performing channel estimation based on the DMRS received only on the third RE; or
a second channel estimation mode of performing channel estimation based on the DMRS received on the third RE and the fourth RE.

Optionally, the first downlink information includes the DMRS corresponding to the PDCCH, and the first processing mode includes at least one of:
a fifth receiving mode of receiving the DMRS only on a first time unit, in which the first time unit is a time unit where the DMRS and the CRS are not overlapped in the frequency domain;
a sixth receiving mode of receiving the DMRS on the first time unit and a second time unit, in which the second time unit is a time unit where the DMRS and the CRS are overlapped in the frequency domain;
a third channel estimation mode of performing channel estimation based on the DMRS received only on the first time unit; or
a fourth channel estimation mode of performing channel estimation based on the DMRS received on the first time unit and the second time unit.

Optionally, the method further includes:
receiving a first message sent by a base station for determining the first processing mode.

Optionally, the first message is used to indicate:
whether the terminal processes the first downlink information on conflicting resources in a case where there is a conflict between the resources corresponding to the first downlink information and the resources corresponding to the CRS.

Optionally, whether the terminal processes the first downlink information on the conflicting resources includes at least one of:
whether the terminal receives the PDCCH on the conflicting resources;
whether the terminal demodulates the PDCCH received on the conflicting resources;
whether the terminal receives the DMRS on the conflicting resources; or
whether the terminal performs channel estimation based on the DMRS received on the conflicting resources.

Optionally, the first downlink information includes the PDCCH, and the conflicting resources include conflicting REs; and/or
the first downlink information includes the DMRS corresponding to the PDCCH, and the conflicting resources include any of:
the conflicting REs; or
all RES corresponding to conflicting symbols.

Optionally, the method further includes:
reporting terminal capability information of the terminal for processing the first downlink information to a base station.

Optionally, determining the first processing mode for processing the first downlink information, includes:
in response to determining according to the terminal capability information that there is only one processing mode for processing the first downlink information, determining the one processing mode as the first processing mode.

Optionally, the method further includes:
in response to determining according to the terminal capability information that there are a plurality of processing modes for processing the first downlink information, receiving a first message sent by the base station for determining the first processing mode.

Optionally, determining the first processing mode for processing the first downlink information, includes:
determining the first processing mode based on a capability of the terminal to process the first downlink information; and
the method further includes:
   reporting the first processing mode to the base station.

Optionally, the method further includes:
receiving association information sent by a base station for determining the first processing mode.

Optionally, the association information is used to indicate first aggregation levels configured by the base station for the terminal.

Optionally, determining the first processing mode for processing the first downlink information, includes:
determining a processing mode corresponding to a maximum aggregation level of the first aggregation levels as the first processing mode based on a first correspondence relationship between different aggregation levels corresponding to the first downlink information and different processing modes of the first downlink information.

Optionally, determining the first processing mode for the terminal to process the first downlink information, includes:
determining the first processing mode corresponding to the first downlink information based on a second correspondence relationship among different PDCCH candidates, different aggregation levels and different processing modes, in which the first processing modes corresponding to the first downlink information configured for different PDCCH candidates are different.

According to a second aspect of embodiments of the disclosure, an information sending method is provided. The method is performed by a base station and includes:
determining a first processing mode for a terminal to process first downlink information, in which resources corresponding to the first downlink information are overlapped with resources corresponding to a CRS; and
sending the first downlink information to the terminal based on the first processing mode.

Optionally, the first downlink information includes at least one of:
a PDCCH; or
a DMRS corresponding to the PDCCH; and
the resources corresponding to the first downlink information include:
   resources where PDCCH candidates corresponding to the PDCCH are located.

Optionally, the first downlink information includes the PDCCH, and the first processing mode includes at least one of:
a first receiving mode of receiving the PDCCH only on a first RE, in which the first RE is a RE mapped by the PDCCH but not by the CRS;
a second receiving mode of receiving the PDCCH on the first RE and a second RE, in which the second RE is a RE mapped by the PDCCH and the CRS;
a first demodulation mode of demodulating the PDCCH received only on the first RE; or
a second demodulation mode of demodulating the PDCCH received on the first RE and the second RE.

Optionally, the first downlink information includes the DMRS corresponding to the PDCCH, and the first processing mode includes at least one of:
a third receiving mode of receiving the DMRS only on a third RE, in which the third RE is a RE mapped by the DMRS but not by the CRS;
a fourth receiving mode of receiving the DMRS on the third RE and a fourth RE, in which the fourth RE is a RE mapped by the DMRS and the CRS;
a first channel estimation mode of performing channel estimation based on the DMRS received only on the third RE; or
a second channel estimation mode of performing channel estimation based on the DMRS received on the third RE and the fourth RE.

Optionally, the first downlink information includes the DMRS corresponding to the PDCCH, and the first processing mode includes at least one of:
a fifth receiving mode of receiving the DMRS only on a first time unit, in which the first time unit is a time unit where the DMRS and the CRS are not overlapped in the frequency domain;
a sixth receiving mode of receiving the DMRS on the first time unit and a second time unit, in which the second time unit is a time unit where the DMRS and the CRS are overlapped in the frequency domain;
a third channel estimation mode of performing channel estimation based on the DMRS received only on the first time unit; or
a fourth channel estimation mode of performing channel estimation based on the DMRS received on the first time unit and the second time unit.

Optionally, the method further includes:
sending a first message for determining the first processing mode to the terminal.

Optionally, the first message is used to indicate:
whether the terminal processes the first downlink information on conflicting resources in a case where there is a conflict between the resources corresponding to the first downlink information and the resources corresponding to the CRS.

Optionally, whether the terminal processes the first downlink information on the conflicting resources includes at least one of:
whether the terminal receives the PDCCH on the conflicting resources;
whether the terminal demodulates the PDCCH received on the conflicting resources;
whether the terminal receives the DMRS on the conflicting resources; or
whether the terminal performs channel estimation based on the DMRS received on the conflicting resources.

Optionally, the first downlink information includes the PDCCH, and the conflicting resources include conflicting REs; and/or
the first downlink information includes the DMRS corresponding to the PDCCH, and the conflicting resources include any of:
the conflicting REs; or
all RES corresponding to conflicting symbols.

Optionally, the method further includes:
receiving terminal capability information reported by the terminal for processing the first downlink information.

Optionally, determining the first processing mode for the terminal to process the first downlink information includes:
in response to determining according to the terminal capability information that there is only one processing mode for the terminal to process the first downlink information, determining the one processing mode as the first processing mode.

Optionally, determining the first processing mode for the terminal to process the first downlink information includes:
in response to determining according to the terminal capability information that there are a plurality of processing modes for the terminal to process the first downlink information, determining one of the plurality of processing modes as the first processing mode; and
the method further including:
   sending a first message for determining the first processing mode to the terminal.

Optionally, determining the first processing mode for the terminal to process the first downlink information, includes:
receiving the first processing mode reported by the terminal, in which the first processing mode is determined by the terminal based on a capability of the terminal to process the first downlink information.

Optionally, the method further includes:
sending association information for determining the first processing mode to the terminal.

Optionally, the association information is used to indicate first aggregation levels configured by the base station for the terminal.

Optionally, determining the first processing mode for the terminal to process the first downlink information includes:
determining a processing mode corresponding to a maximum aggregation level of the first aggregation levels as the first processing mode based on a first correspondence relationship between different aggregation levels corresponding to the first downlink information and different processing modes of the first downlink information.

Optionally, determining the first processing mode for the terminal to process the first downlink information, includes:
determining the first processing mode corresponding to the first downlink information based on a second correspondence relationship among different PDCCH candidates, different aggregation levels and different processing modes, in which the first processing modes corresponding to the first downlink information configured for different PDCCH candidates are different.

Optionally, the method further includes:
in response to a conflict between the resources corresponding to the first downlink information and the resources corresponding to the CRS, determining whether to send the first downlink information to the terminal on conflicting resources based on the first processing mode.

According to a third aspect of embodiments of the disclosure, an information processing apparatus is provided. The apparatus is applied to a terminal and includes:
a first determining module, configured to determine a first processing mode for processing first downlink information, in which resources corresponding to the first downlink information are overlapped with resources corresponding to a CRS; and
a processing module, configured to process the first downlink information based on the first processing mode.

According to a fourth aspect of embodiments of the disclosure, an information sending apparatus is provided. The apparatus is applied to a base station and includes:
a second determining module, configured to determine a first processing mode for a terminal to process first downlink information, in which resources corresponding to the first downlink information are overlapped with resources corresponding to a CRS; and
a first sending module, configured to send the first downlink information to the terminal based on the first processing mode.

According to a fifth aspect of embodiments of the disclosure, a computer-readable storage medium is provided. The storage medium stores a computer program, and the computer program is configured to execute the above information processing method performed by the terminal.

According to a sixth aspect of embodiments of the disclosure, a computer-readable storage medium is provided. The storage medium stores a computer program, and the computer program is configured to execute the above information sending method performed by the base station.

According to a seventh aspect of embodiments of the disclosure, an information processing device is provided. The information processing device includes:
a processor; and
a memory for storing instructions executable by the processor;
in which the processor is configured to execute the information processing method performed by the terminal.

According to an eighth aspect of embodiments of the disclosure, an information sending device is provided. The information sending device includes:
a processor; and
a memory for storing instructions executable by the processor;
in which the processor is configured to execute the information sending method performed by the base station.

The technical schemes provided by the embodiments of the disclosure include the following beneficial effects.

In the embodiments of the disclosure, the first processing mode is determined for the first downlink information, wherein the resources corresponding to the first downlink information are overlapped with the resources corresponding to the CRS, which ensures a consistent understanding between the base station and the terminal and reduces an inter-system interference during transmission in a DSS scenario, thereby improving a transmission efficiency of the corresponding PDCCH.

It is understood that the foregoing general description and the following detailed description are exemplary and explanatory only and do not limit the disclosure.

### BRIEF DESCRIPTION OF THE DRAWINGS

The accompanying drawings, which are incorporated in and constitute a part of this specification, illustrate embodiments consistent with the disclosure and together with the specification serve to explain the principles of the disclosure.
FIG. 1A is a flowchart of an information processing method according to an exemplary embodiment.
FIG. 1B is a schematic diagram of a receiving mode according to an exemplary embodiment.
FIG. 2 is a flowchart of an information processing method according to an exemplary embodiment.
FIG. 3 is a flowchart of an information processing method according to an exemplary embodiment.
FIG. 4 is a flowchart of an information processing method according to an exemplary embodiment.
FIG. 5 is a flowchart of an information sending method according to an exemplary embodiment.
FIG. 6 is a flowchart of an information sending method according to an exemplary embodiment.
FIG. 7 is a flowchart of an information sending method according to an exemplary embodiment.
FIG. 8 is a flowchart of an information sending method according to an exemplary embodiment.
FIG. 9 is a block diagram of an information processing apparatus according to an exemplary embodiment.
FIG. 10 is a block diagram of an information sending apparatus according to an exemplary embodiment.
FIG. 11 is a schematic diagram of an information processing device according to an exemplary embodiment of the disclosure.
FIG. 12 is a schematic diagram of an information sending device according to an exemplary embodiment of the disclosure.

### DETAILED DESCRIPTION

Reference will now be made in detail to exemplary embodiments, examples of which are illustrated in the accompanying drawings. The following description refers to the accompanying drawings in which the same numbers in different drawings represent the same or similar elements unless otherwise represented. The implementations set forth in the following description of exemplary embodiments do not represent all implementations consistent with the disclosure. Instead, they are merely examples of apparatuses and methods consistent with aspects related to the disclosure as recited in the attached claims.

The terms used in the disclosure are only for the purpose of describing specific embodiments, and are not intended to limit the disclosure. The singular forms of "a" and "the" used in the disclosure and attached claims are also intended to include plural forms, unless the context clearly indicates other meanings. It should also be understood that the term "and/or" as used herein refers to and includes any or all possible combinations of one or more associated listed items.

It is understandable that although the terms "first", "second", and "third" may be used in the disclosure to describe various information, these terms are not used to limit the information. These terms are only used to distinguish the same type of information from each other. For example, without departing from the scope of the disclosure, the first information may also be referred to as the second information, and similarly, the second information may also be referred to as the first information. Depending on the context, the term "if" as used herein can be interpreted as "when", "while" or "in response to determining".

In the current protocol, in order to avoid degradation of performance of NR PDCCH caused by serious interference from the LTE system, the terminal of the NR system only monitors PDCCH candidates that have no overlap with a LTE CRS in terms of resources. However, considering that the LTE CRS supports up to four ports, the CRS occupies six Orthogonal Frequency Division Multiplexing (OFDM) symbols in one slot. In this case, NR PDCCH can only be transmitted on the remaining eight OFDM symbols (one slot includes fourteen OFDM symbols), and cannot be transmitted in a Control Resource Set (CORESET) with a duration of three consecutive symbols, which seriously limits the capacity and transmission performance of the NR PDCCH. To further improve the resource utilization efficiency of PDCCH in a DSS scenario, the #110 meeting of Radio Access Network (RAN) has reached a conclusion to support the following features:
supporting a terminal to receive a NR PDCCH on a LTE CRS symbol, and whether to report the above feature is based on a terminal capability; and
mapping a NR PDCCH and a PDCCH DMRS based on a legacy mechanism.

For terminals that support the above features, the following two channel estimation modes can be used for channel estimation.

The first mode is a legacy channel estimation mode, in which the terminal performs channel estimation based on DMRSs on all symbols.

The second mode is a clean symbol mode, in which the terminal performs channel estimation only based on DMRSs on symbols where the CRS is not transmitted.

Two channel estimation modes for the terminal are defined above, and the terminal can chooses one of them. If the corresponding channel estimation mode is determined based on an implementation of the terminal, the base station does not know the actual channel estimation mode of the terminal. In order to ensure the normal progress of PDCCH demodulation, the base station transmits the DMRS based on the worst condition, that is, it transmits in the time-frequency domain corresponding to the PDCCH candidates based on the legacy DMRS mode, including transmitting the DMRS on a RE where the CRS is at. The above scenario will not only cause serious interference to LTE transmission, but also cause the DMRS transmitted on the symbol where the CRS is at to be wasted if the terminal chooses the clean symbol mode for channel estimation but the base station continues to transmit the DMRS on the frequency domain resources corresponding to the symbol where the CRS is at, which increases the transmission cost of the base station.

On the other hand, in the scenario where the PDCCH is transmitted in the symbol where the CRS is at, if the terminal chooses the legacy channel estimation mode but does not adopt a corresponding interference cancellation mechanism, the interference of CRS will reduce a PDCCH BLock Error Rate (BLER). In order to ensure that the performance index of PDCCH BLER is 1%, the base station needs to configure a larger Aggregation Level (AL) to meet requirements of legacy Control Elements (CEs), but if the terminal actually uses the clean symbol mode for channel estimation, the corresponding transmission resources will be wasted.

The legacy channel estimation mode includes, but is not limited to, the following two types.

The first type is to perform channel estimation based on the DMRS under a legacy mapping mechanism.

It is worth noting that the resources mapped by the DMRS corresponding to the PDCCH are not overlapped with that of the CRS. In Release-18 (Rel-18), although the resources of the DMRS corresponding to the PDCCH are overlapped with that of the CRS, the PDCCH DMRS mapping method is still the same as the PDCCH DMRS mapping method defined in the scenario where the resources mapped by the DMRS corresponding to the PDCCH are not overlapped with that of the CRS.

The second type is to perform channel estimation based on a legacy mechanism.

In an embodiment of the disclosure, the terminal may receive a corresponding DMRS based on a predefined DMRS mapping mechanism, and perform channel estimation based on the received DMRS. The predefined DMRS mapping mechanism may be defined by a Release-15 (Rel-15) or Release-16 (Rel-16) mechanism, which is not limited in the disclosure.

The fact that the terminal does not adopt the corresponding interference cancellation mechanism means that the terminal does not adopt a corresponding enhancement mechanism, which causes the terminal to determine all the received signals as PDCCHs. With the serious interference of CRS, the detection efficiency of PDCCH is reduced.

From another perspective, it is impossible to achieve consistent understanding between the base station and the terminal regarding the mechanism of transmitting the NR PDCCH on a RE where the CRS is at.

Similar to channel estimation, if the way the terminal receives the PDCCH is based on an implementation of the terminal, the base station may adopt a legacy PDCCH demodulation mode to meet the requirements of the terminal. If the terminal does not adopt a corresponding interference cancellation solution, the base station may need to transmit the PDCCH on the RE where the CRS is at, which may cause interference to the LTE transmission system and cause waste of resources.

The legacy PDCCH demodulation mode is that the terminal receives a corresponding PDCCH based on a predefined PDCCH mapping mode and demodulates based on the received PDCCH. The predefined PDCCH mapping mechanism is defined by the Rel-15 or Rel-16 mechanism, which is not limited by the disclosure.

It is worth noting that the above mechanism is applied to a scenario where the resources mapped by the PDCCH are not overlapped with that of the CRS. In Rel-18, the PDCCH mapping mode means that although some resources corresponding to the PDCCH are overlapped with that of the CRS, the same mapping mode is still adopted as that in the scenario where the resources corresponding to the PDCCH are not overlapped with that of the CRS. The fact that the terminal does not adopt the corresponding interference cancellation mechanism means that the terminal does not adopt the corresponding enhancement mechanism, which causes the terminal to determine all the received signals as PDCCHs. With the serious interference of CRS, the detection efficiency of PDCCH is reduced.

In order to solve the above technical problems, the disclosure provides an information processing method and an information processing apparatus, an information sending method and an information sending apparatus, and a storage medium. Through the first processing mode for the first downlink information, the resources corresponding to which are overlapped with the resources corresponding to the CRS, it ensures a consistent understanding between the base station and the terminal, and reduces an inter-system interference during transmission in a DSS scenario, with high usability.

An information processing method provided by the disclosure will be introduced from the terminal side first.

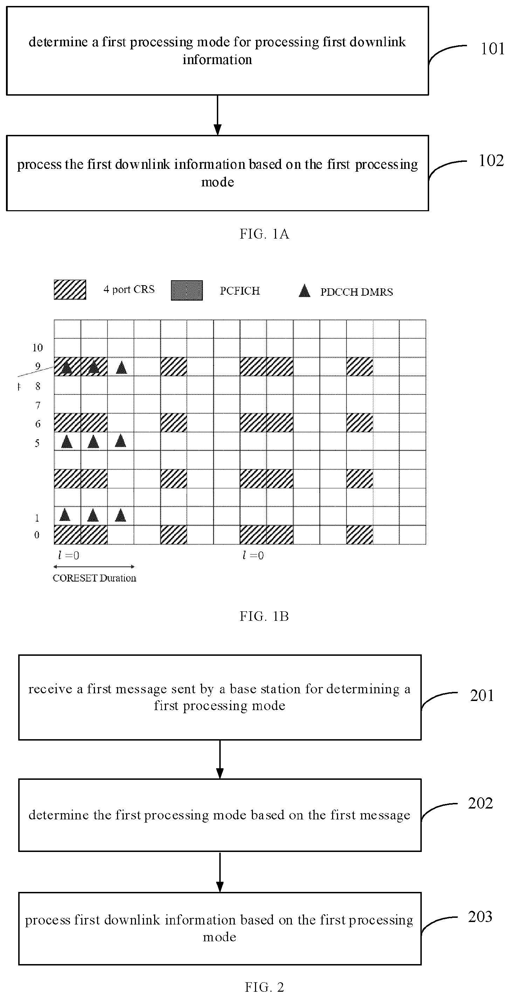

An embodiment of the disclosure provides an information processing method as shown in FIG. 1A. FIG. 1A is a flowchart of an information processing method according to an embodiment. The method is performed by a terminal, and includes the following steps.

At step 101, a first processing mode for processing first downlink information is determined.

In an embodiment of the disclosure, the first processing mode includes, but is not limited to, signal reception, signal demodulation, signal-based channel estimation, etc. It is understood that the first processing mode may also include signal filtering, signal detection, signal modulation, etc., which is not limited by the disclosure.

In an embodiment of the disclosure, resources corresponding to the first downlink information are overlapped with resources corresponding to a CRS.

In a possible implementation, the first downlink information may include a NR PDCCH. It should be noted that the following PDCCHs described below in the disclosure are all NR PDCCHs.

In another possible implementation, the first downlink information may include a DMRS corresponding to a PDCCH.

In another possible implementation, the first downlink information may include a PDCCH and a DMRS corresponding to the PDCCH.

Certainly, the first downlink information may also include other information, which is not limited by the disclosure.

Correspondingly, in a possible implementation, the first downlink information includes a PDCCH, and the resources corresponding to the first downlink information may include resources where PDCCH candidates corresponding to the PDCCH are located.

In another possible implementation, the first downlink information includes a DMRS corresponding to a PDCCH, and the resources corresponding to the first downlink information may include resources where PDCCH candidates of the PDCCH corresponding to the DMRS are located.

In a possible implementation, the first downlink information includes a PDCCH, and the first processing mode includes, but is not limited to, at least one of: a PDCCH receiving mode or a PDCCH demodulation mode.

In an example, the PDCCH receiving mode includes, but is not limited to, at least one of the following receiving modes.

The first receiving mode is to receive a PDCCH only on a first RE.

The terminal determines resources corresponding to PDCCH mapping based on a predetermined mapping pattern corresponding to the PDCCH, and determines resources corresponding to CRS mapping based on a predetermined CRS mapping pattern. For example, a specific RE, which is a RE mapped by the PDCCH but not by the CRS, is called the first RE. Correspondingly, a RE mapped by the PDCCH and the CRS is called a second RE. The first RE and the second RE include both time-domain resources and frequency-domain resources. It is understood that the second RE mapped by the PDCCH and the CRS is a conflicting RE.

For example, the PDCCH mapping method is applied to a scenario where the resources mapped by the PDCCH are not overlapped with that of the CRS. In Rel-18, the PDCCH mapping method means that although some resources corresponding to the PDCCH are overlapped with that of the CRS, the same mapping method is still adopted as that in the scenario where the resources corresponding to the PDCCH are not overlapped with that of the CRS.

The first receiving mode is also called a puncture receiving mode. In the first receiving mode, the terminal only receives the PDCCH on the first RE, that is, the terminal will give up the reception of the corresponding signal on the second RE.

In an example, the PDCCH is mapped by the above mechanism, and the terminal can receive the PDCCH by the first receiving mode.

It is worth noting that the above mechanism is applied to a scenario where the resources mapped by the PDCCH are not overlapped with that of the CRS. In Rel-18, the PDCCH mapping method means that although some resources corresponding to the PDCCH are overlapped with that of the CRS, the same mapping method is still adopted as that in the scenario where the resources corresponding to the PDCCH are not overlapped with that of the CRS.

The above is only an exemplary explanation. In the scenario where the PDCCH is mapped by adopting other mapping modes, the terminal may also receive the PDCCH in the first receiving mode, which is not limited in the disclosure.

The second receiving mode is to receive the PDCCH on the first RE and the second RE.

The second receiving mode is also known as a legacy receiving mode, which specifically refers to that the terminal can receive the corresponding PDCCH on the mapping resources based on the PDCCH mapping pattern defined in Rel-15 or Rel-16.

It is worth noting that in some scenarios, the resources mapped by the PDCCH are not overlapped with that of the CRS, but in other scenarios, the resources mapped by the PDCCH are overlapped with that of the CRS, but the same mapping method is still adopted as that in the scenarios where the resources mapped by the PDCCH are not overlapped with that of the CRS.

For PDCCH candidates that conflict with the CRS, the terminal still receives the PDCCH by adopting the PDCCH pattern defined by the above mechanism.

In an example, in a scenario where the PDCCH is mapped by adopting the above mechanism, the terminal may receive the PDCCH in the second receiving mode. The legacy mapping method has been introduced in the above embodiments, and will not be repeated here.

The above is only an exemplary explanation. In the scenario where the PDCCH is mapped by other mapping modes, the terminal can also receive the PDCCH by adopting the second reception method, which is not limited by the disclosure.

In another example, the PDCCH demodulation mode includes, but is not limited to, at least one of the following modes.

The first demodulation mode is to demodulate PDCCH-related signals received only on the first RE.

The first demodulation mode is also called a puncture demodulation mode, which means that the terminal does not demodulate signals received on the conflicting resources.

The conflicting resources may include, but are not limited to, the above-mentioned conflicting RE.

The terminal determines a RE set corresponding to PDCCH candidates and a RE set corresponding to the CRS based on the PDCCH mapping mechanism and the corresponding LTE CRS mapping mechanism, respectively. For REs that belong to both the RE set mapped by the PDCCH candidates and the RE set mapped by the CRS, the REs are REs where the conflicting resources are located. In the disclosure, the REs where the conflicting resources are located are collectively referred to as conflicting REs.

The second demodulation mode is to demodulate PDCCH-related signals received on the first RE and the second RE.

The second demodulation mode is also called a legacy demodulation mode, which specifically refers to that the terminal can demodulate the corresponding PDCCH-related signal based on the predefined PDCCH mapping pattern and the corresponding PDCCH-related signal received on the mapping resources.

It is worth noting that the PDCCH mapping pattern is applied to the scenario where the resources mapped by the PDCCH are not overlapped with that of the CRS. In Rel-18, the PDCCH mapping method means that some resources mapped by the PDCCH are overlapped with that of the CRS, but the same mapping method is still adopted as that in the scenarios where the resources mapped by the PDCCH are not overlapped with that of the CRS.

The terminal still receives and demodulates the corresponding PDCCH by using the PDCCH pattern defined by the above mechanism for PDCCH candidates that conflict with the CRS.

It should be noted that in the disclosure, the time-domain resources and the frequency-domain resources where the CRS is at can be configured based on a signaling sent by the base station. For example, they can be determined based on a corresponding Radio Resource Control (RRC) configuration signaling. In another possible implementation, the first downlink information includes the DMRS corresponding to the PDCCH, and the first processing mode may include, but is not limited to, at least one of: a DMRS receiving mode or a DMRS-based channel estimation mode for channel estimation.

In an example, the DMRS receiving mode includes, but is not limited to, at least one of the following receiving modes.

The third receiving mode is to receive a DMRS only on a third RE.

The terminal can determine resources corresponding to DMRS mapping based on a predetermined mapping pattern corresponding to the DMRS, and determine resources corresponding to CRS mapping based on a predetermined CRS mapping pattern. A RE mapped by the DMRS but not mapped by the CRS may be called the third RE. Correspondingly, the RE mapped by the DMRS and the CRS is called a fourth RE. It can be understood that the fourth RE mapped by the DMRS and the CRS is a conflicting RE.

It should be noted that the third RE and the fourth RE include both time-domain resources and frequency-domain resources. For the DMRS corresponding to the PDCCH, if the DMRS and the CRS are overlapped in the frequency domain, channel estimation is performed without using all DMRSs received on the corresponding symbol.

In an embodiment of the disclosure, in the third receiving mode, the terminal only receives the DMRS on the third RE, that is, the terminal will not give up the reception of the DMRS on the fourth RE. The content of the conflicting RE has been introduced above, and will not be repeated here.

The fourth receiving mode is to receive the DMRS on the third RE and the fourth RE.

In an embodiment of the disclosure, in the fourth receiving mode, the terminal can receive the DMRS on the third RE and the fourth RE. In another example, the DMRS receiving mode includes, but is not limited to, at least one of the following modes.

The fifth receiving mode is to receive the DMRS only on a first time unit.

The terminal can determine the resources corresponding to DMRS mapping based on the predetermined mapping pattern corresponding to the DMRS, and determine the resources corresponding to CRS mapping based on the predetermined CRS mapping pattern.

In an embodiment of the disclosure, the first time unit refers to a time unit on which the DMRS and the CRS are not overlapped in the frequency domain, and the second time unit refers to a time unit in which the DMRS and the CRS are overlapped in the frequency domain.

In an embodiment of the disclosure, in the fifth receiving mode, the terminal only receives the DMRS on the first time unit, that is, the terminal will give up the reception of the DMRS on the second time unit. If the DMRS and the CRS are overlapped in a part of the frequency domain on a symbol, all the DMRSs on the symbol will not be received, or channel estimation will not be performed for all the DMRSs on the symbol. In the fifth receiving mode, the terminal may not receive the DMRS on the conflicting resources, which may include all REs corresponding to the conflicting symbol. Correspondingly, the fifth receiving mode is also called a clean symbol receiving mode.

For example, as illustrated in FIG. 1B, taking symbol#1 as an example, it is possible that the CRS and the DMRS are overlapped on a part of REs corresponding to the symbol #1. In this case, the terminal will not receive the DMRS on all REs of the symbol #1, even if some REs where the DMRS is at do not conflict with the CRS.

In the disclosure, the conflicting symbol refers to a symbol in which the frequency-domain resources of the DMRS are overlapped with that of the CRS, e.g., symbol #1 in FIG. 1B. All REs corresponding to the conflicting symbol include all the REs whose time-domain range is within the conflicting symbol.

The sixth receiving mode is to receive the DMRS on the first time unit and a second time unit.

The sixth reception method is also known as a legacy receiving mode, which specifically refers to that the terminal can receive the DMRS on the corresponding mapping resources based on the predefined DMRS mapping pattern(which for example, may include, but is not limited to, the DMRS mapping pattern defined by Rel-15 or Rel-16).

The terminal still receives the DMRS that conflicts with the CRS using the DMRS pattern defined by the above mechanism.

In an example, the channel estimation mode for DMRS-based channel estimation includes but is not limited to at least one of the following modes.

The first channel estimation mode is to perform channel estimation based on DMRS-related signals received only on the third RE

Considering that if the DMRS and the CRS are overlapped in the frequency domain, channel estimation may not be performed for all the DMRSs received on the REs, and the terminal does not perform channel estimation based on the DMRSs received on the REs where the conflicting resources are located.

The second channel estimation mode is to perform channel estimation based on DMRS-related signals received on the third RE and the fourth RE.

In another example, the channel estimation mode for DMRS-based channel estimation includes but is not limited to at least one of the following modes.

The third channel estimation mode is to perform channel estimation based on DMRS-related signals received only on the first time unit.

Considering that if the DMRS and the CRS are overlapped in the frequency domain, channel estimation may not be performed for all DMRSs received on the symbol, and the terminal does not perform channel estimation based on the DMRSs received on the conflicting resources. The conflicting resources include all REs corresponding to conflicting symbols. Correspondingly, the third channel estimation mode is also called a clean symbol channel estimation mode. The clean symbol channel estimation mode has been introduced in the above embodiments, and will not be repeated here.

The fourth channel estimation mode is to perform channel estimation based on DMRS-related signals received on the first time unit and at the second time unit.

The fourth channel estimation mode is also called a legacy channel estimation mode. The legacy channel estimation mode has been introduced in the above embodiments, and will not be repeated here.

It should be noted that the third and fourth receiving modes are DMRS receiving modes for REs, and the fifth and sixth receiving modes are DMRS receiving modes for the symbol level in the time domain. Correspondingly, the first channel estimation mode and the second channel estimation mode are modes for performing channel estimation on DMRS-related information received at the RE level, and the third channel estimation mode and the fourth channel estimation mode are modes for performing channel estimation on DMRS-related information received at the symbol level in the time domain.

It should be noted that in the disclosure, the time-domain resources and the frequency-domain resources corresponding to the CRS can be configured based on a signaling sent by the base station, such as an RRC configuration signaling.

In an embodiment of the disclosure, the receiving modes corresponding to the PDCCH and the DMRS can also be determined based on the reported terminal capability, respectively. The following takes the PDCCH as an example for explanation.

In one case, in order to reduce the operation complexity, the terminal does not adopt a corresponding mechanism, so it cannot eliminate the influence of CRS interference at the receiving end. The terminal can only receive all the signals related to the PDCCH on the conflicting resources, and demodulate the related signals into the PDCCH.

In another case, an advanced receiver adopts a corresponding mechanism, for example, an interference cancellation mechanism, to eliminate the influence of CRS interference at the receiving end, thereby effectively improving the demodulation performance of PDCCH.

The conflicting resources have been defined above and will not be repeated here.

At step 102, the first downlink information is processed based on the first processing mode.

In a possible implementation, the first downlink information includes a PDCCH, and the first processing mode includes a PDCCH receiving mode and/or a PDCCH demodulation mode. Correspondingly, the terminal receives the PDCCH based on the PDCCH receiving mode defined by the first processing mode, and/or, the terminal demodulates the PDCCH based on the PDCCH demodulation mode defined by the first processing mode.

In another possible implementation, the first downlink information includes a DMRS corresponding to the PDCCH. Correspondingly, the first processing mode includes a DMRS receiving mode and/or a DMRS-based channel estimation mode for channel estimation. Correspondingly, the terminal receives the DMRS based on the DMRS receiving mode defined by the determined first processing mode, and/or performs channel estimation based on the channel estimation mode defined by the first processing mode.

In another possible implementation, the first downlink information includes the PDCCH and the DMRS corresponding to the PDCCH. Correspondingly, the terminal receives the PDCCH based on the PDCCH receiving mode defined by the first processing mode and/or demodulates the PDCCH based on the PDCCH demodulation mode defined by the first processing mode, and receives the DMRS based on the DMRS receiving mode defined by the first processing mode and/or performs channel estimation based on the channel estimation mode defined by the first processing mode.

In the above embodiments, the first processing mode is determined for the first downlink information, wherein the resources corresponding to the first downlink information are overlapped with the resources corresponding to the CRS. After determining the first processing mode, the terminal processes the first downlink information based on the determined first processing mode, and the base station can determine the mode of sending the first downlink information based on the first processing mode, and sends the first downlink information to the terminal based on the sending mode. In this way, the consistent understanding between the base station and the terminal can be ensured, and an inter-system interference during transmission in a DSS scenario can be reduced, thereby improving a transmission efficiency of the corresponding PDCCH.

The way in which the terminal determines the first processing mode is introduced below.

Method 1: determining the first processing mode based on an indication from the base station.

As illustrated in FIG. 2, FIG. 2 is a flowchart of an information processing method according to an embodiment. The method is performed by a terminal and includes the following steps.

At step 201, a first message sent by a base station for determining a first processing mode is received.

In an embodiment of the disclosure, the first processing mode includes, but is not limited to, signal reception, signal demodulation, signal-based channel estimation, etc. It is understood that the first processing mode may also include signal filtering, signal detection, signal modulation, etc., which is not limited by the disclosure.

In an embodiment of the disclosure, resources corresponding to the first downlink information are overlapped with resources corresponding to a CRS.

In a possible implementation, the first downlink information may include a NR PDCCH and/or a DMRS corresponding to the PDCCH.

The specific information contents included in the first downlink information, the resources corresponding to the first downlink information, and the specific contents of the first processing mode have been introduced in the previous embodiments, and will not be repeated here.

In an embodiment of the disclosure, the terminal may determine the first processing mode based on a signaling sent by the base station, such as the first message.

In a possible implementation, the first message is used to indicate whether the terminal processes the first downlink information on conflicting resources in a case where there is a conflict between the resources corresponding to the first downlink information and the resources corresponding to the CRS.

In an example, the first downlink information includes a PDCCH, and the first message is used to indicate whether the terminal receives the PDCCH on the conflicting resources.

For the PDCCH, the conflicting resources may include conflicting REs, which include both frequency-domain resources and time-domain resources. The explanations of conflicting resource and conflicting RE have been introduced above, which will not be repeated here.

In another example, the first message is used to indicate whether the terminal performs demodulation on PDCCH-related signals received on the conflicting resources. The conflicting resources may include the conflicting RE, i.e., a RE where a conflict occurs (the RE includes both frequency-domain resources and time-domain resources). The explanations of conflicting resource and conflicting RE have been introduced in the above, and will not be repeated here.

In another example, the first downlink information includes a DMRS corresponding to the PDCCH, and the first message is used to indicate whether the terminal receives the DMRS on the conflicting resources. For the DMRS corresponding to the PDCCH, the conflicting resources include conflicting REs or all REs corresponding to conflicting symbols.

The explanations of conflicting resource, conflicting RE, conflicting symbol and all REs corresponding to the conflicting symbol have been introduced in the above, and will not be repeated here.

In another example, the first downlink information includes the DMRS corresponding to the PDCCH, and the first message is used to indicate whether the terminal performs channel estimation based on DMRS-related signals received on the conflicting resources. The conflicting resources include conflicting REs or all REs corresponding to conflicting symbols.

In another example, the first downlink information includes the PDCCH and the DMRS corresponding to the PDCCH, and the terminal can determine that the first processing mode of the PDCCH is associated with the first processing mode of the DMRS, and the base station can indicate the first processing mode of the PDCCH and the associated first processing mode of the DMRS simultaneously through the first message.

In an example, the first message is used to indicate whether the terminal receives the PDCCH on the conflicting resources (which include conflicting REs), and whether the terminal receives the DMRS on the conflicting resources. The conflicting resources include conflicting REs or all REs corresponding to conflicting symbols.

In another example, the first message is used to indicate whether the terminal demodulates PDCCH-related signals received on the conflicting resources, which specifically are the conflicting REs, and whether the terminal performs channel estimation based on DMRS-related signals received on the conflicting resources, which specifically are conflicting REs or all REs corresponding to conflicting symbols.

For example, the base station may indicate both the first processing mode of the PDCCH and the first processing mode of the DMRS through the first message based on an association relationship between the first processing mode of the PDCCH and the first processing mode of the DMRS.

In an example, the PDCCH received by the terminal on the conflicting resources is associated with the DMRS received on the conflicting resources, and the first message is used to jointly indicate whether the terminal receives the PDCCH on the conflicting RE and whether the terminal receives the DMRS on all REs corresponding to the conflicting symbol.

In another example, demodulation performed by the terminal based on PDCCH-related signals received on the conflicting resources is associated with channel estimation performed by the terminal based on the DMRS received on the conflicting resources. The first message is used to jointly indicate whether the terminal performs demodulation based on PDCCH-related signals received on the conflicting RE, and whether the terminal performs channel estimation based on DMRS-related signals received on all the REs corresponding to the conflicting symbol.

In an example, the first message is used to indicate whether the terminal receives the first downlink information on the conflicting resources. The first downlink information includes, but is not limited to, a NR PDCCH and a DMRS corresponding to the NR PDCCH.

For example, if the first message indicates that the terminal receives the first downlink information on the conflicting resources, the terminal can receive the PDCCH on the conflicting RE and receives the DMRS on all the REs corresponding to the conflicting symbol.

In another example, the first message is used to indicate that the terminal performs demodulation or channel estimation based on first downlink information received on the conflicting resources. The first downlink information includes, but is not limited to, a NR PDCCH and a DMRS corresponding to the NR PDCCH.

For example, if the first message indicates that the terminal performs demodulation or channel estimation based on the first downlink information received on the conflicting resources, the terminal can perform demodulation based on PDCCH-related signals received on the conflicting RE, and performs channel estimation based on DMRS-related signals received on all the REs corresponding to the conflicting symbol.

The above is only an exemplary explanation. The first downlink information includes at least two items of information. The schemes associated with the first processing modes corresponding to the first downlink information should all fall within the protection scope of the disclosure.

In a possible implementation, the base station sends the first message to the terminal through an RRC signaling.

In an example, the base station sends the first message to the terminal through a serving cell configuration information element (servingCellConfig IE) included in the RRC signaling.

The above is only an exemplary explanation. The base station may send the first message to the terminal through other signaling, such as a media access control control element (MAC CE) and/or Downlink Control Information (DCI). Or, the base station may send the first message to the terminal through other IEs in the RRC signaling, which is not limited in the disclosure.

At step 202, the first processing mode is determined based on the first message.

In an embodiment of the disclosure, the terminal can determine the processing mode indicated by the first message as the first processing mode for processing first downlink information.

In a possible implementation, the first message is used to indicate that the terminal does not receive the PDCCH on the conflicting resources. The conflicting resources include conflicting REs. Correspondingly, the terminal can receive the PDCCH in the above-mentioned first receiving mode, that is, the terminal only receives the PDCCH on the first RE and gives up the reception of the PDCCH on the conflicting REs.

In another possible implementation, the first message is used to indicate that the terminal receives the PDCCH on the conflicting resources. The conflicting resources include conflicting REs. Correspondingly, the terminal can receive the PDCCH in the above-mentioned second receiving mode, that is, the terminal receives the PDCCH on the first RE and the second RE.

In another possible implementation, the first message is used to indicate that the terminal does not demodulate the PDCCH received on the conflicting resources. The conflicting resources include conflicting REs. Correspondingly, the terminal demodulates the PDCCH in the above first demodulation mode, and does not demodulate the PDCCH received on the conflicting REs.

In another possible implementation, the first message is used to indicate that the terminal demodulates the PDCCH received on the conflicting resources. The conflicting resources include conflicting REs. Correspondingly, the terminal demodulates the PDCCH in the above second demodulation mode, and demodulates the PDCCH received on the first RE and the second RE.

In another possible implementation, the first message is used to indicate that the terminal does not receive the DMRS on the conflicting resources. The conflicting resources include conflicting REs. Correspondingly, the terminal receives the DMRS in the above-mentioned third receiving mode, that is, the terminal receives the DMRS only on the third RE, and gives up the reception of the DMRS on the fourth RE.

In another possible implementation, the first message is used to indicate that the terminal does not receive the DMRS on the conflicting resources. The conflicting resources include all REs corresponding to conflicting symbols. Correspondingly, the terminal receives the DMRS in the above-mentioned fifth receiving mode, that is, the terminal receives the DMRS only on the first time unit, and gives up the reception of the DMRS on the second time unit.

In another possible implementation, the first message is used to indicate that the terminal receives the DMRS on the conflicting resources. The conflicting resources include conflicting REs. Correspondingly, the terminal receives the DMRS in the above fourth receiving mode, that is, the terminal receives the DMRS on the third RE and the fourth RE.

In another possible implementation, the first message is used to indicate that the terminal receives the DMRS on the conflicting resources. The conflicting resources include all REs corresponding to conflicting symbols. Correspondingly, the terminal receives the DMRS in the above sixth receiving mode, that is, the terminal receives the DMRS on the first time unit and the second time unit.

In another possible implementation, the first message is used to indicate that the terminal does not perform channel estimation based on the DMRS received on the conflicting resources. The conflicting resources include conflicting REs. Correspondingly, the terminal adopts the first channel estimation mode.

In another possible implementation, the first message is used to indicate that the terminal does not perform channel estimation based on the DMRS received on the conflicting resources. The conflicting resources include all REs corresponding to conflicting symbols. Correspondingly, the terminal performs channel estimation in the third channel estimation mode, i.e., the clean symbol channel estimation mode.

In another possible implementation, the first message is used to indicate that the terminal performs channel estimation based on the DMRS received on the conflicting resources. The conflicting resources include conflicting REs. Correspondingly, the terminal adopts the second channel estimation mode.

In another possible implementation, the first message is used to indicate that the terminal performs channel estimation based on the DMRS received on the conflicting resources. The conflicting resources include all REs corresponding to conflicting symbols. Correspondingly, the terminal performs channel estimation in the fourth channel estimation mode, i.e., the legacy channel estimation mode.

At step 203, first downlink information is processed based on the first processing mode.

In a possible implementation, the first downlink information includes the PDCCH, and the first processing mode includes the PDCCH receiving mode and/or the PDCCH demodulation mode. Correspondingly, the terminal receives the PDCCH based on the PDC receiving mode defined by the first processing mode, and/or demodulates the PDCCH based on the PDCCH demodulation mode defined by the first processing mode.

In another possible implementation, the first downlink information includes the DMRS corresponding to the PDCCH. Correspondingly, the first processing mode includes the DMRS receiving mode and/or the DMRS-based channel estimation mode for channel estimation. Correspondingly, the terminal receives the DMRS based on the DMRS receiving mode defined by the determined first processing mode, and/or performs channel estimation based on the channel estimation mode defined by the first processing mode.

In another possible implementation, the first downlink information includes the PDCCH and the DMRS corresponding to the PDCCH. Correspondingly, the terminal receives the PDCCH based on the PDCCH receiving mode defined by the first processing mode and/or demodulates the PDCCH based on the PDCCH demodulation mode defined by the first processing mode, and receives the DMRS based on the DMRS receiving mode defined by the first processing mode, and/or performs channel estimation based on the channel estimation mode defined by the first processing mode.

In the above embodiment, the terminal can determine the first processing mode for processing the first downlink information based on the indication from the base station. The resources corresponding to the first downlink information are overlapped with the resources corresponding to the CRS. After the terminal determines the first processing mode, it processes the first downlink information based on the determined first processing mode, and the base station determines the mode for sending the first downlink information based on the first processing mode and sends the first downlink information to the terminal based on the sending mode. In this way, the consistent understanding between the base station and the terminal can be ensured, and an inter-system interference during transmission in a DSS scenario can be reduced, thereby improving a transmission efficiency of the corresponding PDCCH.

Method 2: determining the first processing mode according to a terminal capability of the terminal to process the first downlink information.

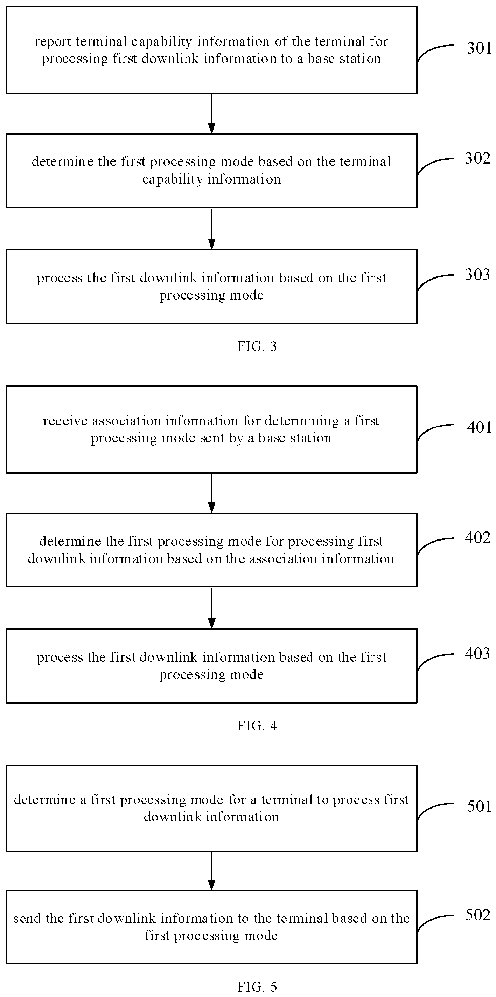

As illustrated in FIG. 3, FIG. 3 is a flowchart of an information processing method according to an embodiment. The method is performed by a terminal and includes the following steps.

At step 301, terminal capability information of the terminal for processing first downlink information is reported to a base station.

In an embodiment of the disclosure, the first processing mode includes, but is not limited to, signal reception, signal demodulation, signal-based channel estimation, etc. It is understood that the first processing mode may also include signal filtering, signal detection, signal modulation, etc., which is not limited by the disclosure.

In an embodiment of the disclosure, the resources corresponding to the first downlink information are overlapped with the resources corresponding to the CRS.

In a possible implementation, the first downlink information may include a NR PDCCH and/or a DMRS corresponding to the PDCCH.

The specific information contents included in the first downlink information, the resources corresponding to the first downlink information, and the specific contents of the first processing mode have been introduced in the previous embodiments, and will not be repeated here.

In an embodiment of the disclosure, the terminal may report to the base station the terminal capability information of the terminal for processing the first downlink information, and determine the first processing mode based on the terminal capability information.

In a possible implementation, the terminal capability information reported by the terminal is used to indicate whether the terminal supports processing the first downlink information on the conflicting resources in a case where there is a conflict between the resources corresponding to the first downlink information and the resources corresponding to the CRS.

In an example, the conflicting resources include, but are not limited to, conflicting REs or all REs corresponding to conflicting symbols. The specific explanation has been introduced above, and will not be repeated here.

In an example, the first downlink information includes the PDCCH, and the terminal capability information may be used to indicate whether the terminal supports receiving the PDCCH on the conflicting resources. The conflicting resources include the conflicting REs. The explanation of the conflicting RE has been introduced in the above, and will not be repeated here.

In another example, the terminal capability information may be used to indicate whether the terminal supports performing PDCCH demodulation on PDCCH-related signals received on the conflicting resources. The conflicting resources include the conflicting REs. The explanation of the conflicting RE has been introduced in the above, and will not be repeated here.

In another example, the first downlink information includes the DMRS corresponding to the PDCCH, and the terminal capability information may be used to indicate whether the terminal supports receiving the DMRS on the conflicting resources. The conflicting resources include conflicting REs or all REs corresponding to conflicting symbols, and the specific explanation has been introduced in the above, and will not be repeated here.

In another example, the terminal capability information may be used to indicate whether the terminal supports performing channel estimation based on the DMRS received on the conflicting resources. The conflicting resources include conflicting REs or all REs corresponding to conflicting symbols, and the specific explanation has been introduced in the above, and will not be repeated here.

In another possible implementation, the terminal may report the corresponding terminal capability information for the PDCCH and the DMRS respectively.

Alternatively, in order to simplify the terminal reporting process, it can be determined that the first processing mode of the PDCCH is associated with the first processing mode of the DMRS. On this basis, the terminal capability information reported by the terminal can be simplified. For example, the terminal capability information can be used to indicate at least one of:
whether the terminal supports receiving the PDCCH on conflicting REs, and whether the terminal supports receiving the DMRS on the conflicting REs or all REs corresponding to conflicting symbols, or
whether the terminal supports demodulating the PDCCH received on the conflicting REs, and whether the terminal supports performing channel estimation based on the DMRS received on the conflicting REs or all the REs corresponding to the conflicting symbols,
whether the terminal supports receiving first downlink information on the conflicting resources, including whether the terminal supports receiving the PDCCH on the conflicting resources and supports receiving the DMRS on the conflicting resources; or
whether the terminal supports demodulating or performing channel estimation based on the first downlink information received on the conflicting resources, including whether the terminal supports performing PDCCH demodulation on PDCCH-related signals received on the conflicting resources and performing channel estimation based on DMRS-related information received on the conflicting resources.

At step 302, the first processing mode is determined based on the terminal capability information.

In a possible implementation, when it is determined according to the terminal capability information that there is only one processing mode for processing the first downlink information, the one processing mode determined according to the terminal capability information is determined as the first processing mode.

In an example, if the terminal capability information indicates the PDCCH receiving mode and/or the PDCCH demodulation mode supported by the terminal, the terminal can determine the mode indicated by the terminal capability information as the first processing mode.

In another example, if the terminal capability information indicates the DMRS receiving mode and/or the channel estimation mode for performing channel estimation based on DMRS-related signals supported by the terminal, the terminal can determine the mode indicated by the terminal capability information as the first processing mode.

For example, if the terminal capability information indicates that the terminal does not support receiving the PDCCH on the conflicting resources, then according to the terminal capability information, it can be determined that the PDCCH receiving mode includes the first receiving mode, and/or that the PDCCH demodulation mode includes the first demodulation mode. Correspondingly, the terminal can take the first receiving mode and/or the first demodulation mode as the first processing mode.

The first receiving mode and the first demodulation mode have been described above, and will not be repeated here.

For another example, if the terminal capability information indicates that the terminal does not support receiving the DMRS corresponding to the PDCCH on the conflicting resources, wherein the conflicting resources include all REs corresponding to the conflicting symbols, it can be determined according to the terminal capability information that the DMRS receiving mode includes the fifth receiving mode and/or that the channel estimation mode includes the third channel estimation mode. Correspondingly, the terminal can take the fifth receiving mode and/or the third channel estimation mode as the first processing mode.

The fifth receiving mode and the third channel estimation mode have already been introduced in the above, and will not be repeated here.

In another possible implementation, when it is determined according to the terminal capability information that there are multiple processing modes for processing the first downlink information, the first message sent by the base station for determining the first processing mode is received.

The base station specifies one of the plurality of processing modes supported by the terminal through the first message, and the terminal determines the processing mode indicated by the first message as the first processing mode.

For example, if the terminal capability information indicates that the terminal supports receiving the PDCCH on the conflicting resources, it can be determined according to the terminal capability information that the PDCCH receiving mode includes the first receiving mode and the second receiving mode, and the base station can specify one of the first receiving mode and the second receiving mode through the first message. For example, the first message indicates the first receiving mode, and the terminal takes the first receiving mode as the first processing mode.

For example, if the terminal capability information indicates that the terminal supports receiving the PDCCH on the conflicting resources, it can be determined according to the terminal capability information that the PDCCH demodulation mode includes the first demodulation mode and the second demodulation mode, and the base station can specify one of the first demodulation mode and the second demodulation mode through the first message. For example, the first message indicates the second demodulation mode, and the terminal takes the second demodulation mode as the first processing mode.

For another example, if the terminal capability information indicates that the terminal supports receiving the DMRS corresponding to the PDCCH on the conflicting resources, wherein the conflicting resources include all RES corresponding to the conflicting symbols, it can be determined according to the terminal capability information that the DMRS receiving mode includes the fifth receiving mode and the sixth receiving mode, and the base station can specify one of the fifth receiving mode and the sixth receiving mode through the first message. For example, the first message indicates the sixth receiving mode, and the terminal takes the sixth receiving mode as the first processing mode.

For another example, if the terminal capability information indicates that the terminal supports receiving the DMRS corresponding to the PDCCH on the conflicting resources, wherein the conflicting resources include all REs corresponding to the conflicting symbols, it can be determined according to the terminal capability information that the channel estimation mode includes the third channel estimation mode and the fourth channel estimation mode, and the base station can specify one of the third channel estimation mode and the fourth channel estimation mode through the first message. For example, the first message indicates the third channel estimation mode, and the terminal takes the third channel estimation mode as the first processing mode. The first message may be an RRC message. In detail, the second message may be sent to the terminal through the servingCellConfig IE in the RRC message.

It should be noted that the way of determining the first processing mode by the terminal based on the first message is similar to the scheme of determining the first processing mode based on the first message sent by the base station in the above embodiment, which is not repeated here.

The above is only an exemplary explanation. The scheme in which the base station sends the indication information to the terminal after the terminal reports its terminal capability information, so that the terminal determines the first processing mode, should belong to the protection scope of the disclosure.

In another possible implementation, the terminal may determine the first processing mode based on the terminal capability of the terminal to process the first downlink information, and report the determined first processing mode to the base station through an RRC message, MAC CE or other messages.

For example, if the terminal capability information indicates that the terminal supports receiving the PDCCH on the REs where the conflicting resources are located, it can be determined according to the terminal capability information that the PDCCH receiving mode includes the first receiving mode and the second receiving mode, and the terminal can take the first receiving mode as the first processing mode and report it to the base station.

The above is only an exemplary explanation. The scheme in which the terminal determines the first processing mode according to its own capabilities and reports it to the base station should fall within the protection scope of the disclosure.

At step 303, the first downlink information is processed based on the first processing mode.

The implementation of step 303 is similar to that of the above step 203, which is not repeated here.

In the above embodiment, the first processing mode for processing the first downlink information is determined based on the terminal capability information reported by the terminal. The resources corresponding to the first downlink information are overlapped with the resources corresponding to the CRS. After the terminal determines the first processing mode, it processes the first downlink information based on the determined first processing mode, and the base station can determine the mode for sending the first downlink information based on the first processing mode and send the first downlink information to the terminal based on the sending mode, which ensures a consistent understanding between the base station and the terminal and reduces an inter-system interference during transmission in a DSS scenario, thereby improving a transmission efficiency of the corresponding PDCCH.

Method 3: determining the first processing mode based on association information.

As illustrated in FIG. 4, FIG. 4 is a flowchart of an information processing method according to an embodiment. The method is performed by a terminal and includes the following steps.

At step 401, association information for determining a first processing mode sent by a base station is received.

In an embodiment of the disclosure, the first processing mode includes, but is not limited to, signal reception, signal demodulation, signal-based channel estimation, etc. It is understood that the first processing mode may also include signal filtering, signal detection, signal modulation, etc., which is not limited by the disclosure.

In an embodiment of the disclosure, the first processing mode is a processing mode used to process the first downlink information, and resources corresponding to the first downlink information are overlapped with resources corresponding to the CRS.

In a possible implementation, the first downlink information may include a NR PDCCH and/or a DMRS corresponding to the PDCCH.

The specific information contents included in the first downlink information, the resources corresponding to the first downlink information, and the specific contents of the first processing method have been introduced in the above embodiments, and will not be repeated here.

In an embodiment of the disclosure, the terminal may determine the first processing mode based on the association information sent by the base station.

In a possible implementation, the base station may send the association information to the terminal through an RRC signaling.

In a possible implementation, the association information may be used to indicate first aggregation levels (ALs) configured by the base station for the terminal.

In an embodiment of the disclosure, PDCCH candidates corresponding to one PDCCH is composed of n consecutive Control Channel Elements (CCEs), and the AL is used to indicate the specific value of n. The CCE is the basic scheduling unit of control channel resource allocation, and one CCE may include six Resource Block Groups (RBGs).

For example, there are four ALs, i.e., 1, 2, 4 and 8. If the first AL is 8, it means that PDCCH candidates corresponding to one PDCCH includes 8 consecutive CCEs.

At step 402, the first processing mode for processing first downlink information is determined based on the association information.

In an embodiment of the disclosure, considering that the base station configures the first AL corresponding to the PDCCH for the terminal based on a Search Space (SS), different first ALs are configured for different PDCCH candidates corresponding to the same SS and/or different SS.

Therefore, the first processing mode can be determined based on the association information in the following ways.

Way 1: determining the first processing mode based on a maximum AL of the configured first ALs.

In detail, a first correspondence relationship between different ALs corresponding to the first downlink information and different processing modes of the first downlink information can be pre-agreed in a protocol, for example, as shown in Table 1.

**Table 1**

| AL | Processing mode of the first downlink information |
|---|---|
| AL#1 | First receiving mode and first demodulation mode |
| AL#2 | Second receiving mode and second demodulation mode |
| AL#3 | Third receiving mode and first channel estimation mode |
| AL#4 | Fourth receiving mode and second channel estimation mode |
| AL#5 | First receiving mode, second receiving mode and second demodulation mode |
| ... ... | ... ... |

In an embodiment of the disclosure, the base station may dynamically or semi-statically configure at least one first AL corresponding to the PDCCH for the terminal, including but not limited to configuring the first ALs for the terminal through a signaling.

In an embodiment, considering that the larger the first AL configured by the base station, the better the performance of the corresponding PDCCH. Therefore, after the terminal obtains the first ALs corresponding to the PDCCH configured by the base station, it can determine a maximum AL of the first ALs. It should be noted that the maximum AL here may be the maximum AL among all the first ALs corresponding to all SSs configured by the base station for the terminal, or may be the maximum AL among the first ALs configured by the base station for the terminal in any SS. Different SSs correspond to different first processing modes. Any SS is an SS specified by the base station through a signaling, or any SS is an SS agreed upon in the protocol, which is not limited in the disclosure.

Further, the terminal determines the processing mode corresponding to the maximum AL based on the maximum AL and Table 1, and takes the determined processing mode as the first processing mode. For example, the maximum AL is AL#2, the terminal takes the second receiving mode and the second demodulation mode corresponding to AL#2 as the first processing mode according to Table 1.

In an example, considering that if the terminal adopts the legacy mode for channel estimation, the quality of channel estimation will be reduced due to the interference of CRS, in order to ensure the performance of channel estimation, it is necessary to configure a larger AL. If the maximum AL in the first ALs configured by the base station is less than or equal to N1, the terminal performs channel estimation in the first channel estimation mode, i.e., the clean symbol mode, and/or receives the DMRS in the third receiving mode.

Correspondingly, if the maximum AL in the first ALs configured by the base station is greater than N1, the terminal performs channel estimation in the second channel estimation mode, i.e., the legacy mode, and/or receives the DMRS in the fourth receiving mode.

In another example, considering that if the terminal adopts the legacy mode to receive and/or demodulate the PDCCH, the performance of PDCCH BLER will degrade due to the interference of CRS, in order to ensure the demodulation performance of PDCCH, it is necessary to configure a larger AL. on the basis, if the maximum AL in the first ALs configured by the base station is less than or equal to N2, the terminal demodulates the PDCCH in the first demodulation mode, i.e., the puncture mode, and/or, receives the PDCCH in the first receiving mode. If the maximum AL in the first ALs configured by the base station is greater than N2, the terminal can demodulate the PDCCH in the second demodulation mode, i.e., the legacy mode, and/or, receive the PDCCH in the second receiving mode.

In another example, considering that the channel estimation performance of the corresponding clean symbol is reduced in the scene where the terminal moves relatively fast, in order to ensure the corresponding channel estimation performance, a larger AL needs to be configured. If the maximum AL in the first ALs configured by the base station is less than or equal to N2, the terminal can perform channel estimation in the second channel estimation mode, i.e., the legacy mode, and/or, receive the DMRS in the fourth receiving mode. Correspondingly, if the maximum AL in the first ALs configured by the base station is greater than N2, the terminal performs channel estimation in the first channel estimation mode, i.e., the clean symbol mode, and/or, receives the DMRS in the third receiving mode.

In another example, if the terminal adopts the legacy mode to receive and/or demodulate a PDCCH, some terminals can improve the demodulation performance of PDCCH through an interference processing mechanism. On the basis, if the maximum AL in the first ALs configured by the base station is less than or equal to N2, the terminal can demodulate the PDCCH in the second demodulation mode, i.e., the legacy mode, and/or, receive the PDCCH in the second receiving mode. If the maximum AL in the first ALs configured by the base station is greater than N2, the terminal can demodulate the PDCCH in the first demodulation mode, i.e., the puncture mode, and/or, receive the PDCCH in the first receiving mode.

For example, the N1/N2 may be predefined in a protocol.

For example, the value of N1/N2 may be taken from the following set {2, 4, 8, 16, 32}.

For example, the value of N1/N2 may also be determined based on reported terminal capabilities.

For example, the value of N1/N2 may also be determined based on a signaling sent by the base station.

The above is only an exemplary explanation. Those skilled in the art can understand that the maximum AL in the first ALs may be replaced by the minimum AL in the first ALs.

The minimum AL may be the minimum AL among the first ALs corresponding to all SSs configured by the base station for the terminal, or the minimum AL among the first ALs configured by the base station for the terminal in any SS. Different SSs correspond to different first processing modes. Any SS is an SS specified by the base station through a signaling, or any SS is an SS agreed upon in a protocol, which is not limited in the disclosure.

The method of determining the first processing mode based on the minimum AL in the first ALs is similar to the method of determining the first processing mode based on the maximum AL in the first ALs, which will not be repeated here.

Way 2: configuring different first processing modes corresponding to the first downlink information for different PDCCH candidates.

Way 1 is to determine the first processing mode for each SS or terminal, while Way 2 is to determine the first processing mode for each PDCCH candidates.

In detail, a second correspondence relationship between different ALs corresponding to different PDCCH candidates and different processing modes can be pre-agreed in the protocol, for example, as shown in Table 2.

**Table 2**

| PDCCH candidates | AL | Processing mode of the first downlink information |
|---|---|---|
| PDCCH candidates#1 | AL#1 | First receiving mode and first demodulation mode |
| PDCCH candidates#2 | AL#2 | Second receiving mode and second demodulation mode |
| PDCCH Candidation#3 | AL#3 | Third receiving mode and first channel estimation mode |
| PDCCH Candidation#4 | AL#4 | Fourth receiving mode and second channel estimation mode |
| ... ... | ... ... | ... ... |

In an embodiment of the disclosure, the base station can dynamically configure the PDCCH candidates and the first ALs corresponding to the PDCCH candidates for the terminal, including but not limited to configuring the PDCCH candidates and the first ALs corresponding to the PDCCH candidates for the terminal through a signaling.

In an embodiment, the terminal may determine the processing mode corresponding to the actual PDCCH candidates corresponding to the first AL as the first processing mode based on the second correspondence relationship among different PDCCH candidates, different ALs and different processing modes.

For example, when the base station configures PDCCH candidates#3 and AL#3 for the terminal, respectively, the terminal determines that the corresponding processing mode includes the third receiving mode and the first channel estimation mode based on Table 2, and takes the third receiving mode and the first channel estimation mode as the first processing mode.

In an embodiment of the disclosure, Table 2 provides different application ranges of the first processing mode relative to Table 1. Taking Table 2 as an example, the first processing modes are applied to each PDCCH candidates, that is, different PDCCH candidates have different first processing modes. Taking Table 1 as an example, the first processing mode is applied to an SS or a terminal. In detail, if the first processing mode corresponds to an SS, the same first processing mode is applied to different PDCCH candidates corresponding to the same SS. Alternatively, if the first processing mode corresponds to a terminal, the same first processing mode is applied to different PDCCH candidates corresponding to all SSs configured by the same terminal.

In an embodiment of the disclosure, ALs configured for each PDCCH candidates may adopt different first processing modes. For example, in Table 2, the PDCCH candidates are different from each other, and the respective ALs are also different. Correspondingly, when the first processing modes corresponding to different PDCCH candidates and ALs are specified in the protocol, different first processing modes can be specified in advance.

At step 403, the first downlink information is processed based on the first processing mode.

In a possible implementation, the first downlink information includes a PDCCH and the first processing mode includes a PDCCH receiving mode and/or a PDCCH demodulation mode. The terminal determines the first processing mode based on the association information, such as the first AL corresponding to PDCCH candidates. Correspondingly, the terminal receives the PDCCH based on the PDCCH receiving mode defined by the first processing mode, and/or demodulates the PDCCH based on the PDCCH demodulation mode defined by the first processing mode.

In an example, the terminal determines the first processing mode based on the minimum AL or the maximum AL in the first ALs, and the specific determination process has been introduced in Way 1 in step 402 above, which will not be repeated here.

In another example, the terminal determines the first processing modes corresponding to different PDCCH candidates and different ALs, and the specific determination process has been introduced in Way 2 in step 402 above, which will not be repeated here.

In another possible implementation, the first downlink information includes a DMRS corresponding to the PDCCH. Correspondingly, the first processing mode includes a DMRS receiving mode and/or a DMRS-based channel estimation mode. The terminal determines the first processing mode based on the association information, such as the first AL corresponding to PDCCH candidates. Correspondingly, the terminal receives the DMRS based on the DMRS receiving mode defined by the determined first processing mode, and/or performs channel estimation based on the channel estimation mode defined by the first processing mode. The process of determining the first processing mode has been introduced in the above embodiment, which will not be repeated here.

In another possible implementation, the first downlink information includes the PDCCH and the DMRS corresponding to the PDCCH, and the terminal determines the first processing mode based on the association information, such as the first AL corresponding to PDCCH candidates. Correspondingly, the terminal receives the PDCCH based on the PDCCH receiving mode defined by the first processing mode and/or demodulates the PDCCH in the PDCCH demodulation mode defined by the first processing mode, and receives the DMRS based on the DMRS receiving mode defined by the first processing mode, and/or performs channel estimation in the channel estimation mode defined by the first processing mode. The process of determining the first processing mode has been introduced in the above embodiment, which will not be repeated here.

In the above embodiment, the first processing mode for processing the first downlink information can be determined based on the association information configured by the base station. The resources corresponding to the first downlink information are overlapped with the resources corresponding to the CRS. After the terminal determines the first processing mode, it processes the first downlink information based on the determined first processing mode, and the base station can determine the mode of sending the first downlink information based on the first processing mode and send the first downlink information to the terminal based on the sending mode, which ensures a consistent understanding between the base station and the terminal and reduces an inter-system interference during transmission in a DSS scenario, thereby improving a transmission efficiency of the corresponding PDCCH.

Next, an information sending method provided by the disclosure will be introduced from the perspective of the base station.

An embodiment of the disclosure provides an information sending method. As illustrated in FIG. 5, FIG. 5 is a flowchart of an information sending method according to an embodiment. The method is performed by a base station, and includes the following steps.

At step 501, a first processing mode for a terminal to process first downlink information is determined.

In an embodiment of the disclosure, the first processing mode includes, but is not limited to, signal reception, signal demodulation, signal-based channel estimation, etc. It is understood that the first processing mode may also include signal filtering, signal detection, signal modulation, etc., which is not limited by the disclosure.

In an embodiment of the disclosure, resources corresponding to the first downlink information are overlapped with resources corresponding to a CRS.

In a possible implementation, the first downlink information may include a NR PDCCH and/or a DMRS corresponding to the PDCCH.

The specific information contents included in the first downlink information, the resources corresponding to the first downlink information, and the specific contents of the first processing mode have been introduced in the previous embodiments, and will not be repeated here.

In an embodiment of the disclosure, the base station may indicate the first processing mode through a signaling, or may determine the first processing mode based on terminal capability information reported by the terminal, or may send association information for determining the first processing mode to the terminal, wherein the first processing mode is indicated through the association information. The specific implementation will be introduced in the following embodiments, and will not be introduced here.

At step 502, the first downlink information is sent to the terminal based on the first processing mode.

In an embodiment of the disclosure, in a case where there is a conflict between the resources corresponding to the first downlink information and the resources corresponding to the CRS, the base station can determine whether to send the first downlink information on the conflicting resources based on the first processing mode.

In an example, if the base station determines based on the first processing mode that the terminal does not receive the first downlink information on the conflicting resources, in order to avoid wasting resources of the base station, the base station does not send the first downlink information on the conflicting resources. That is, the base station may only send the first downlink information to the terminal on the non-conflicting resources. In another example, if the base station determines based on the first processing mode that the terminal will not demodulate or perform channel estimation on the first downlink information received on the conflicting resources, in order to avoid wasting resources of the base station, the base station may not send the first downlink information on the conflicting resources. That is, the base station may only send the first downlink information to the terminal on the non-conflicting resources. In another example, if the base station determines based on the first processing mode that the terminal can receive the first downlink information on the conflicting resources, the base station can send the first downlink information to the terminal on the conflicting resources and the non-conflicting resources. In another example, if the base station determines based on the first processing mode that the terminal can demodulate or perform channel estimation on the first downlink information received on the conflicting resources, the base station can send the first downlink information to the terminal on the conflicting resources and the non-conflicting resources.

The above conflicting resources may include conflicting RES or all REs corresponding to conflicting symbols.

In an example, if the first processing mode includes the first receiving mode described above, the base station determines that the terminal does not receive the PDCCH on the conflicting resources, and the base station may send the PDCCH to the terminal only on the first RE.

If the first processing mode includes the above-mentioned second receiving mode, the base station determines that the terminal can receive the PDCCH on the conflicting resources. Correspondingly, the base station can send the PDCCH to the terminal on the first RE and the second RE.

In another example, if the first processing mode includes the first demodulation mode, the base station determines that the terminal will not demodulate the PDCCH received on the conflicting resources. In order to avoid wasting resources of the base station, the base station may send the PDCCH to the terminal only on the first RE.

If the first processing mode includes the second demodulation mode, the base station determines that the terminal can demodulate the PDCCH received on the conflicting resources. Correspondingly, the base station can send the PDCCH to the terminal on the first RE and the second RE.

In another example, if the first processing mode includes the above-mentioned third receiving mode, the base station determines that the terminal does not receive the DMRS corresponding to the PDCCH on the conflicting resources, and the base station may send the DMRS corresponding to the PDCCH to the terminal only on the third RE.

If the first processing mode includes the above-mentioned fourth receiving mode, the base station determines that the terminal can receive the DMRS corresponding to the PDCCH on the conflicting resources, and the base station may send the DMRS corresponding to the PDCCH on the third RE and the fourth RE.

In another example, if the first processing mode includes the above-mentioned first channel estimation mode, the base station determines that the terminal will not perform channel estimation based on the DMRS corresponding to the PDCCH received on the conflicting resources. In order to avoid wasting resources of the base station, the base station may send the DMRS corresponding to the PDCCH only on the third RE.

If the first processing mode includes the above-mentioned second channel estimation mode, the base station determines that the terminal can perform channel estimation based on the DMRS corresponding to the PDCCH received on the conflicting resources. Correspondingly, the base station can send the DMRS corresponding to the PDCCH on the third RE and the fourth RE.

In another example, if the first processing mode includes the above-mentioned fifth receiving mode, the base station determines that the terminal does not receive the DMRS corresponding to the PDCCH on the conflicting resources, and the base station may send the DMRS corresponding to the PDCCH to the terminal only on the first time unit.

If the first processing mode includes the above-mentioned sixth receiving mode, the base station determines that the terminal can receive the DMRS corresponding to the PDCCH on the conflicting resources, and the base station may send the DMRS corresponding to the PDCCH on a first time unit and a second time unit.

In another example, if the first processing mode includes the above-mentioned third channel estimation mode, the base station determines that the terminal will not perform channel estimation based on the DMRS corresponding to the PDCCH received on the conflicting resources. In order to avoid wasting resources of the base station, the base station may send the DMRS corresponding to the PDCCH only on the first time unit.

If the first processing mode includes the above-mentioned fourth channel estimation mode, the base station determines that the terminal can perform channel estimation based on the DMRS corresponding to the PDCCH received on the conflicting resources. Correspondingly, the base station may send the DMRS corresponding to the PDCCH on the first time unit and the second time unit.

The receiving modes, the demodulation modes, the channel estimation modes, the first RE, the second RE, the third RE, the fourth RE, the first time unit and the second time unit have been introduced in the above embodiments, and will not be repeated here.

In the above embodiment, the base station can determine the first processing mode for the terminal to process the first downlink information, and then send the first downlink information to the terminal based on the first processing mode, which ensures a consistent understanding between the base station and the terminal and reduces an inter-system interference during transmission in a DSS scenario, thereby improving a transmission efficiency of the corresponding PDCCH.

Next, the method for the base station to determine the first processing mode will be introduced.

In a first method, the base station sends an indication message for determining the first processing mode to the terminal.

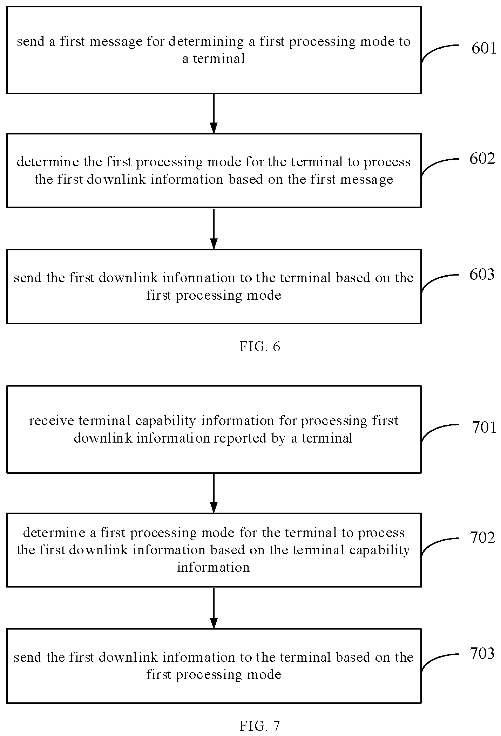

As illustrated in FIG. 6, FIG. 6 is a flowchart of an information sending method according to an embodiment. The method is performed by a base station, and includes the following steps.

At step 601, a first message for determining a first processing mode is sent to a terminal.

In an embodiment of the disclosure, the first processing mode includes, but is not limited to, signal reception, signal demodulation, signal-based channel estimation, etc. It is understood that the first processing mode may also include signal filtering, signal detection, signal modulation, etc., which is not limited by the disclosure.

In an embodiment of the disclosure, resources corresponding to the first downlink information are overlapped with resources corresponding to a CRS.

In a possible implementation, the first downlink information may include a NR PDCCH and/or a DMRS corresponding to the PDCCH.

The specific information contents included in the first downlink information, the resources corresponding to the first downlink information, and the specific contents of the first processing mode have been introduced in the previous embodiments, and will not be repeated here.

In an embodiment of the disclosure, the first processing mode may be determined based on the implementation of the base station. In order to ensure a consistent understanding between the terminal and the base station, the base station may send the first message for determining the first processing mode to the terminal.

In a possible implementation, the first message is used to indicate whether the terminal processes the first downlink information on the conflicting resources in a case where there is a conflict between the resources corresponding to the first downlink information and the resources corresponding to the CRS.

In an example, the first downlink information includes a PDCCH, and the first message is used to indicate whether the terminal receives the PDCCH on REs where the conflicting resources are located.

For the PDCCH, the conflicting resources may include conflicting REs. The conflicting REs include both frequency-domain resources and time-domain resources. The explanations of the conflicting resource and the conflicting RE have been introduced above, which will not be repeated here]

In another example, the first message is used to indicate whether the terminal performs PDCCH demodulation on PDCCH-related signals received on the conflicting resources. The conflicting resources include conflicting REs, that is, REs where conflict occurs (the RE includes both frequency-domain resources and time-domain resources). The explanations of the conflicting resource and the conflicting RE have been introduced in the foregoing, which will not be repeated here.

In another example, the first downlink information includes the DMRS corresponding to the PDCCH, and the first message is used to indicate whether the terminal receives the DMRS on the conflicting resources. The conflicting resources include conflicting REs or all REs corresponding to conflicting symbols. The explanations of the conflicting resource, the conflicting RE, the conflicting symbol and all the REs corresponding to the conflicting symbol have been introduced in the foregoing, which will not be repeated here.

In another example, the first downlink information includes the DMRS corresponding to the PDCCH, and the first message is used to indicate whether the terminal performs channel estimation based on DMRS-related signals received on symbols where the conflicting resources are located. The conflicting resources include conflicting REs or all REs corresponding to conflicting symbols.

In another example, the first downlink information includes the PDCCH and the DMRS corresponding to the PDCCH, and the base station can indicate the first processing mode of the PDCCH and the first processing mode of the associated DMRS through the first message.

In an example, the first message is used to indicate whether the terminal receives a PDCCH on the conflicting resources (the conflicting resources include conflicting Res), and whether the terminal receives a DMRS on the conflicting resource(the conflicting resources include conflicting REs or all REs corresponding to conflicting symbols).

In another example, the first message is used to indicate whether the terminal demodulates PDCCH-related signals received on the conflicting resources (the conflicting resources include conflicting Res), and whether the terminal performs channel estimation based on DMRS-relateds signal received on the conflicting resources (the conflicting resources include conflicting REs or all REs corresponding to conflicting symbols).

For example, the base station may jointly indicate the first processing mode of the PDCCH and the first processing mode of the DMRS through the first message based on an association relationship between the first processing mode of the PDCCH and the first processing mode of the DMRS.

In an example, the first message is used to jointly indicate whether the terminal receives a PDCCH on the conflicting REs and whether the terminal receives a DMRS on the conflicting REs.

In another example, the first message is used to jointly indicate whether demodulation is performed based on the PDCCH-related signals received on the conflicting resources, and whether the terminal performs channel estimation based on DMRS-related signals received on the conflicting resources.

In an example, the first message is used to indicate whether the terminal receives first downlink information on the conflicting resources. The first downlink information includes, but is not limited to, a NR PDCCH and a DMRS corresponding to the NR PDCCH.

For example, if the first message sent by the base station to the terminal is used to indicate that the terminal receives first downlink information on the conflicting resource, the terminal can receive a PDCCH on the conflicting REs and receives a DMRS on the conflicting REs or all REs corresponding to the conflicting symbols.

In another example, the first message is used to indicate that the terminal performs demodulation or channel estimation based on first downlink information received on the conflicting resources. The first downlink information includes, but is not limited to, a NR PDCCH and a DMRS corresponding to the NR PDCCH.

For example, if the first message sent by the base station to the terminal indicates that the terminal performs demodulation or channel estimation based on first downlink information received on the conflicting resources, the terminal can perform demodulation based on PDCCH-related signals received on the conflicting REs, and can perform channel estimation based on DMRS-related signals received on the conflicting REs or all REs corresponding to the conflicting symbols.

The above is only an exemplary explanation. The first downlink information includes at least two items of information, and the scheme where the first processing modes of the first downlink information are associated should belong to the protection scope of the disclosure.

In an example, the base station may send the first message to the terminal through a servingCellConfig IE included in an RRC signaling.

The above is only an exemplary explanation. The base station can send the first message to the terminal through other signaling, such as a MAC CE and/or DCI, or the base station can also send the first message to the terminal through other information elements in an RRC signaling, which is not limited in the disclosure.

At step 602, the first processing mode for the terminal to process the first downlink information is determined based on the first message.

In an embodiment of the disclosure, the base station may determine that the terminal takes a processing mode indicated by the first message as the first processing mode for processing first downlink information.

In a possible implementation, the first message is used to indicate that the terminal does not receive a PDCCH on the conflicting resources. The conflicting resources include conflicting REs. Correspondingly, the base station determines that the terminal receives the PDCCH in the above-mentioned first receiving mode, that is, the terminal only receives the PDCCH on the first RE and does not receive a PDCCH on the conflicting REs.

In another possible implementation, the first message is used to indicate that the terminal receives a PDCCH on the conflicting resources. The conflicting resources include conflicting REs. Correspondingly, the base station determines that the terminal receives the PDCCH in the above-mentioned second receiving mode, that is, the terminal receives the PDCCH on the first RE and the second RE.

In another possible implementation, the first message is used to indicate that the terminal does not demodulate the PDCCH received on REs where the conflicting resources are located. The conflicting resources include conflicting REs. Correspondingly, the base station can determine that the terminal demodulates the PDCCH in the above first demodulation mode, and does not demodulate the PDCCH received on the conflicting REs.

In another possible implementation, the first message is used to indicate that the terminal demodulates the PDCCH received on the conflicting resources. The conflicting resources include conflicting REs. Correspondingly, the base station can determine that the terminal can demodulate the PDCCH in the above second demodulation mode, and demodulates the PDCCH received on the first RE and the second RE.

In another possible implementation, the first message is used to indicate that the terminal does not receive the DMRS on the conflicting resources. The conflicting resources include conflicting REs. Correspondingly, the base station can determine that the terminal can receive the DMRS in the above-mentioned third receiving mode, that is, the terminal receives the DMRS only on the third RE, and does not receive the DMRS on the fourth RE.

In another possible implementation, the first message is used to indicate that the terminal does not receive the DMRS on the conflicting resources. The conflicting resources include all REs corresponding to the conflicting symbols. Correspondingly, the base station can determine that the terminal can receive the DMRS in the above-mentioned fifth receiving mode, that is, the terminal receives the DMRS only on the first time unit, and does not receive the DMRS on the second time unit.

In another possible implementation, the first message is used to indicate that the terminal receives the DMRS on the conflicting resources. The conflicting resources include conflicting REs. Correspondingly, the base station can determine that the terminal can receive the DMRS in the above fourth receiving mode, that is, the terminal receives the DMRS on the third RE and the fourth RE.

In another possible implementation, the first message is used to indicate that the terminal receives the DMRS on the conflicting resources. The conflicting resources include all REs corresponding to the conflicting symbols. Correspondingly, the base station can determine that the terminal can receive the DMRS in the above sixth receiving mode, that is, the terminal receives the DMRS on the first time unit and the second time unit.

In another possible implementation, the first message is used to indicate that the terminal does not perform channel estimation based on the DMRS received on the conflicting resources. The conflicting resources include conflicting REs. Correspondingly, the base station can determine that the terminal adopts the first channel estimation mode.

In another possible implementation, the first message is used to indicate that the terminal does not perform channel estimation based on the DMRS received on the conflicting resources. The conflicting resources include all REs corresponding to the conflicting symbols. Correspondingly, the base station determines that the terminal performs channel estimation in the third channel estimation mode, i.e., the clean symbol channel estimation mode.

In another possible implementation, the first message is used to indicate that the terminal performs channel estimation based on the DMRS received on the conflicting resources. The conflicting resources include conflicting REs. Correspondingly, the base station can determine that the terminal adopts the second channel estimation mode.

In another possible implementation, the first message is used to indicate that the terminal performs channel estimation based on the DMRS received on the conflicting resources. Correspondingly, the base station determines that the terminal performs channel estimation in the fourth channel estimation mode, i.e., the legacy channel estimation mode.

At step 603, the first downlink information is sent to the terminal based on the first processing mode.

The implementation of this step is similar to that of step 502, which is not repeated here.

In the above embodiment, the base station can send the first message for determining the first processing mode to the terminal and determines that the terminal determines the first processing mode based on the first message, and the base station sends the first downlink information to the terminal based on the first processing mode, which ensures a consistent understanding between the base station and the terminal and reduces an inter-system interference during transmission in a DSS scenario, thereby improving a transmission efficiency of the corresponding PDCCH.

In a second method, the base station receives terminal capability information reported by the terminal to process the first downlink information, and first processing mode is determined based on the terminal capability information reported by the terminal.

As illustrated in FIG. 7, FIG. 7 is a flowchart of an information sending method according to an embodiment. The method is performed by a base station, and includes the following steps.

At step 701, terminal capability information for processing first downlink information reported by a terminal is received.

In an embodiment of the disclosure, the first processing mode includes, but is not limited to, signal reception, signal demodulation, signal-based channel estimation, etc. It is understood that the first processing mode may also include signal filtering, signal detection, signal modulation, etc., which is not limited by the disclosure.

In an embodiment of the disclosure, resources corresponding to the first downlink information are overlapped with resources corresponding to a CRS.

In a possible implementation, the first downlink information may include a NR PDCCH and/or a DMRS corresponding to the PDCCH.

The specific information contents included in the first downlink information, the resources corresponding to the first downlink information, and the specific contents of the first processing mode have been introduced in the previous embodiments, and will not be repeated here.

In an embodiment of the disclosure, the base station can receive terminal capability information reported by the terminal for processing the first downlink information.

In a possible implementation, the terminal capability information reported by the terminal may be used to indicate whether the terminal supports processing the first downlink information on the conflicting resources in a case where there is a conflict between the resources corresponding to the first downlink information and the resources corresponding to the CRS.

In an example, if the first downlink information includes a PDCCH, the conflicting resources include but are not limited to conflicting REs. If the first downlink information includes a DMRS corresponding to the PDCCH, the conflicting resources include but are not limited to conflicting REs or all REs corresponding to conflicting symbols. The specific explanation has been introduced above, and will not be repeated here.

In another possible implementation, it can be determined that the first processing mode of the PDCCH is associated with the first processing mode of the DMRS. On the basis, the terminal capability information reported by the terminal can be simplified. For example, the terminal capability information can be used to indicate at least one of:
whether the terminal supports receiving a PDCCH on conflicting resources, and whether the terminal supports receiving a DMRS on the conflicting resources;
whether the terminal supports demodulating the PDCCH received on the conflicting resources, and whether the terminal supports performing channel estimation based on the DMRS received on the conflicting resources;
whether the terminal supports receiving first downlink information on the conflicting resources, including whether the terminal supports receiving the PDCCH on the conflicting resources and whether the terminal supports receiving the DMRS on the conflicting resources; or
whether the terminal supports demodulating or performing channel estimation based on the first downlink information received on the conflicting resources, including whether the terminal supports performing PDCCH demodulation on PDCCH-related signals received on the conflicting resources, and whether the terminal supports performing channel estimation based on DMRS-related information received on the conflicting resources.

At step 702, a first processing mode for the terminal to process the first downlink information is determined based on the terminal capability information.

In a possible implementation, if it is determined according to the terminal capability information that there is only one processing mode for processing the first downlink information, the base station can directly determine the processing mode determined according to the terminal capability information as the first processing mode for the terminal to process the first downlink information.

In an example, when the terminal capability information indicates a PDCCH receiving mode and/or a PDCCH demodulation mode supported by the terminal, the base station can determine the mode indicated by the terminal capability information as the first processing mode.

In another example, when the terminal capability information indicates a DMRS receiving mode and/or a channel estimation mode based on the DMRS-related signals supported by the terminal, the base station can determine the mode indicated by the terminal capability information as the first processing mode.

In another possible implementation, when it is determined according to the terminal capability information that there are multiple processing modes for processing the first downlink information, the base station can determine one of the processing modes as the first processing mode.

Further, the base station may also send a first message for determining the first processing mode to the terminal.

Optionally, the first message may be an RRC message. In detail, the first message may be sent to the terminal through a servingCellConfig IE in the RRC message.

The above is only an exemplary explanation. The scheme in which the base station sends an indication message to the terminal for determining the first processing mode after the terminal reports the terminal capability information should belong to the protection scope of the disclosure.

In another possible implementation, the terminal can determine the first processing mode based on a capability of the terminal to process the first downlink information, and the base station expects to directly receive the first processing mode reported by the terminal. Optionally, the base station may receive the first processing mode reported by the terminal through an RRC message, a MAC CE or other messages.

At step 703, the first downlink information is sent to the terminal based on the first processing mode.

The implementation of this step is similar to that of step 502, which will not be repeated here.

In the above embodiment, the base station can determine the first processing mode based on the terminal capability information reported by the terminal, and then send the first downlink information to the terminal based on the first processing mode, which ensures a consistent understanding between the base station and the terminal and reduces an inter-system interference during transmission in a DSS scenario, thereby improving a transmission efficiency of the corresponding PDCCH.

In a third method, the base station sends association information for determining the first processing mode to the terminal.

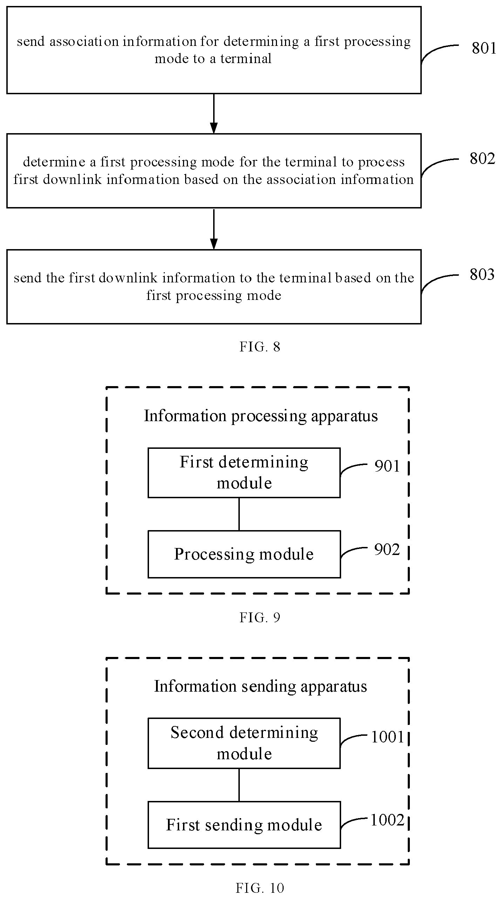

As illustrated in FIG. 8, FIG. 8 is a flowchart of an information sending method according to an embodiment. The method is performed by a base station, and includes the following steps.

At step 801, association information for determining a first processing mode is sent to a terminal.

In an embodiment of the disclosure, the first processing mode includes, but is not limited to, signal reception, signal demodulation, signal-based channel estimation, etc. It is understood that the first processing mode may also include signal filtering, signal detection, signal modulation, etc., which is not limited by the disclosure.

In a possible implementation, the base station may send the association information to the terminal through an RRC signaling.

In an embodiment of the disclosure, the first processing mode is a mode for processing the first downlink information, and resources corresponding to the first downlink information are overlapped with resources corresponding to a CRS.

In a possible implementation, the first downlink information may include a NR PDCCH and/or a DMRS corresponding to the PDCCH.

The specific information contents included in the first downlink information, the resources corresponding to the first downlink information, and the specific contents of the first processing mode have been introduced in the previous embodiments, and will not be repeated here.

In an embodiment of the disclosure, the base station may send the association information for determining the first processing mode to the terminal.

In a possible implementation, the association information may be used to indicate first ALs configured by the base station for the terminal.

In an embodiment of the disclosure, PDCCH candidates corresponding to one PDCCH is composed of n consecutive CCEs, and an AL is used to indicate the specific value of n. The CCE is the basic scheduling unit of control channel resource allocation, and one CCE may include six RBGs.

For example, there are four ALs, i.e., 1, 2, 4 and 8. If the first AL is 8, it means that PDCCH candidates of a corresponding PDCCH includes 8 consecutive CCEs.

At step 802, a first processing mode for the terminal to process first downlink information is determined based on the association information.

In an embodiment of the disclosure, the base station can configure the first AL corresponding to the PDCCH for the terminal based on a SS, and different first ALs can configured for different PDCCH candidates corresponding to the same SS and/or different SS.

In an embodiment of the disclosure, the base station can determine the first processing mode for the terminal to process the first downlink information based on the association information in the following ways.

Way 1: determining the first processing mode based on a maximum AL of the first ALs configured for the terminal.

In detail, a first correspondence relationship between different ALs corresponding to the first downlink information and different processing modes of the first downlink information can be pre-agreed in a protocol, for example, as shown in Table 1.

In an embodiment of the disclosure, the base station can dynamically configures at least one first AL corresponding to a PDCCH for the terminal.

In an embodiment of the disclosure, considering that the larger the first AL configured by the base station for the terminal, the better the performance of the corresponding PDCCH, the base station can determine that the terminal takes the processing mode corresponding to the maximum AL in the first ALs as the first processing mode. The process of determining the first processing mode by the base station is similar to the process of determining the first processing mode by the terminal based on the maximum AL, and details are not repeated here.

It should be noted that the maximum AL here may be the maximum AL among the first ALs configured by the base station corresponding to all SSs for the terminal, or may be the maximum AL among the first ALs configured by the base station for the terminal in any SS. Different SSs correspond to different first processing modes. Any SS is an SS specified by the base station through a signaling, or any SS is an SS agreed upon in the protocol, which is not limited in the disclosure.

In an example, considering that if the terminal adopts the legacy mode for channel estimation, the quality of channel estimation will be reduced due to the interference of CRS, in order to ensure the performance of channel estimation, the base station needs to configure a larger AL for the terminal. The base station can determine that if the maximum AL in the first ALs configured is less than or equal to N1, the first processing mode includes a first channel estimation mode, , i.e., the clean symbol mode, for channel estimation, and/or the third receiving mode for receiving the DMRS.

Correspondingly, if the maximum AL in the first ALs configured by the base station is greater than N1, the first processing mode includes a second channel estimation mode, i.e., the legacy mode, for channel estimation, and/or the fourth receiving mode for receiving the DMRS.

In another example, considering that the channel estimation performance of the corresponding clean symbol is reduced in the scene where the terminal moves relatively fast, in order to ensure the corresponding channel estimation performance, the base station needs to configure a larger AL for the terminal. If the maximum AL in the first ALs configured by the base station is less than or equal to N2, the first processing mode includes a first demodulation mode, i.e., the puncture mode, for demodulating the PDCCH, and/or, a first receiving mode for receiving the PDCCH. If the maximum AL in the first ALs configured by the base station is greater than N2, the first processing mode includes a second demodulation mode, i.e., the legacy mode, for modulating the PDCCH, and/or, a second receiving mode for receiving the PDCCH.

In another example, considering that the channel estimation performance of the corresponding clean symbol is reduced in the scene where the terminal moves relatively fast, in order to ensure the corresponding channel estimation performance, the base station needs to configure a larger AL for the terminal. If the maximum AL in the first ALs configured by the base station is less than or equal to N2, the first processing mode includes a second channel estimation mode, i.e., the legacy mode, for channel estimation, and/or, a fourth receiving mode for receiving the DMRS. Correspondingly, if the maximum AL in the first ALs configured by the base station is greater than N2, the first processing mode includes a first channel estimation mode, i.e., the clean symbol mode, for channel estimation, and/or, a third receiving mode for receiving the DMRS.

In another example, if the terminal adopts the legacy mode to receive and/or demodulate a PDCCH, some terminals can improve the demodulation performance of PDCCH through an interference processing mechanism. On the basis, if the maximum AL in the first ALs configured by the base station is less than or equal to N2, the first processing mode includes a second demodulation mode, i.e., the legacy mode, for modulating the PDCCH, and/or, a second receiving mode for receiving the PDCCH. If the maximum AL in the first ALs configured by the base station is greater than N2, the first processing mode includes a first demodulation mode, i.e., the puncture mode, for modulating the PDCCH, and/or, the first receiving mode for receiving the PDCCH.

For example, the N1/N2 may be predefined in a protocol.

For example, the value of N1/N2 may be taken from the following set {2, 4, 8, 16, 32}.

For example, the value of N1/N2 may also be determined based on reported terminal capabilities.

For example, the value of N1/N2 may also be determined based on a signaling sent by the base station.

The above is only an exemplary explanation. Those skilled in the art understand that the maximum AL in the first ALs may be replaced by the minimum AL in the first ALs.

The minimum AL may be the minimum AL among the first ALs corresponding to all SSs configured by the base station for the terminal, or the minimum AL among the first ALs configured by the base station for the terminal in any SS. Different SSs correspond to different first processing modes. Any SS is an SS specified by the base station through a signaling, or any SS is an SS agreed upon in a protocol, which is not limited in the disclosure.

The method of determining the first processing mode based on the minimum AL in the first ALs is similar to the method of determining the first processing mode based on the maximum AL in the first ALs, which will not be repeated herein.

Way 2: configuring different first processing modes corresponding to the first downlink information for different PDCCH candidates.

Way 1 is to determine the first processing mode for each SS or terminal, while Way 2 is to determine the first processing mode for each PDCCH candidates.

In detail, the second correspondence relationship between different ALs corresponding to different PDCCH candidates and different processing modes is pre-agreed in the protocol, for example, as shown in Table 2.

In an embodiment of the disclosure, the base station may dynamically or semi-statically configure PDCCH candidates and first ALs corresponding to the PDCCH candidates for the terminal.

In an embodiment, the base station determines that the terminal can take the processing mode corresponding to the actual PDCCH candidates of the first AL as the first processing mode based on the second correspondence relationship. The process of determining the first processing mode by the base station is similar to the process of determining the first processing mode by the terminal based on the PDCCH candidates and the first ALs, which will not be repeated here.

In an embodiment of the disclosure, different first processing modes may be configured for different ALs corresponding to each PDCCH candidates. For example, in Table 2, the PDCCH candidates are different from each other, and the respective ALs are also different. Correspondingly, when the protocol specifies PDCCH candidates and first processing modes corresponding to ALs, different first processing modes can be pre-agreed.

In an embodiment of the disclosure, Table 2 provides different application ranges of the first processing mode relative to Table 1. Taking Table 2 as an example, the first processing modes are applied to each PDCCH candidates, that is, different PDCCH candidates correspond to different first processing modes. Taking Table 1 as an example, the first processing mode is applied to an SS or a terminal. In detail, if the first processing mode corresponds to an SS, the same first processing mode is applied to different PDCCH candidates corresponding to the SS, or if the first processing mode corresponds to a terminal, the same first processing mode is applied to different PDCCH candidates corresponding to all SSs configured by the terminal.

At step 803, the first downlink information is sent to the terminal based on the first processing mode.

The implementation of this step corresponds to step 403 performed by the terminal, which will not be repeated here.

In the above embodiment, the base station can send the association information for determining the first processing mode to the terminal, and then send the first downlink information to the terminal based on the first processing mode, which ensures a consistent understanding between the base station and the terminal and reduces an inter-system interference during transmission in a DSS scenario, thereby improving a transmission efficiency of the corresponding PDCCH.

The above method is further explained below through examples.

Assuming that a NR system and an LTE system performs transmission on the same frequency band, the specific embodiments of the disclosure will be elaborated below from the perspective of the terminal, and the network side will perform a corresponding operation based on the corresponding scheme.

In an embodiment of the disclosure, the resources corresponding to the first downlink information are overlapped with the resources corresponding to the CRS.

In a possible implementation, the first downlink information may include a NR PDCCH.

In another possible implementation, the first downlink information may include a DMRS corresponding to a PDCCH.

In another possible implementation, the first downlink information may include a NR PDCCH and a DMRS corresponding to the PDCCH.

Certainly, the first downlink information may also include other information, which is not limited by the disclosure.

Correspondingly, in a possible implementation, the first downlink information includes a NR PDCCH, and the resources corresponding to the first downlink information include: resources where PDCCH candidates corresponding to the PDCCH are located.

In another possible implementation, the first downlink information includes a DMRS corresponding to a PDCCH, and the resources corresponding to the first downlink information include: resources where PDCCH candidates corresponding to the DMRS corresponding to the PDCCH are located.

In another possible implementation, the first downlink information includes a NR PDCCH and a DMRS corresponding to the PDCCH, and the resources corresponding to the first downlink information include: resources where PDCCH candidates corresponding to the PDCCH are located, and resources where PDCCH candidates corresponding to the DMRS corresponding to the PDCCH are located.

In a possible implementation, the first downlink information includes a NR PDCCH, and the first processing mode includes, but is not limited to, at least one of: a PDCCH receiving mode and a PDCCH demodulation mode.

In an example, the PDCCH receiving mode includes, but is not limited to, at least one of:
a first receiving mode, which receives a PDCCH only on a first RE; or
a second receiving mode, which receives a PDCCH on the first RE and a second RE.

The specific explanations of the first receiving mode and the second receiving mode are the same as those of the first receiving mode and the second receiving mode in the above-mentioned embodiments, which will not be repeated here.

In another example, the PDCCH demodulation mode includes, but is not limited to, at least one of:
a first demodulation mode, which demodulates a PDCCH received only on the first RE; or
a second demodulation mode, which demodulates a PDCCH received on the first RE and the second RE.

The specific explanations of the first demodulation mode and the second demodulation mode are the same as those of the first demodulation mode and the second demodulation mode in the above-mentioned embodiments, which will not be repeated here.

In another possible implementation, the first downlink information includes a DMRS corresponding to a PDCCH, and the first processing mode includes, but is not limited to, at least one of: a DMRS receiving mode and a DMRS-based channel estimation mode.

In an example, the DMRS receiving mode includes, but is not limited to, at least one of:
a third receiving mode, which receives a DMRS only on a third RE; or
a fourth receiving mode, which receives a DMRS on the third RE and a fourth RE.

In an example, the DMRS receiving mode includes, but is not limited to, at least one of:
a fifth receiving mode, which receives a DMRS only on a first time unit; or
a sixth receiving mode, which receives a DMRS on the first time unit and a second time unit.

In an example, the channel estimation mode includes, but is not limited to, at least one of:
a first channel estimation mode, which performs channel estimation based on a DMRS received only on the third RE; or
a second channel estimation mode, which performs channel estimation based on a DMRS received on the third RE and the fourth RE.

In an example, the channel estimation mode includes, but is not limited to, at least one of:
a third channel estimation mode, which performs channel estimation based on a DMRS received only on the first time unit; or
a fourth channel estimation mode, which performs channel estimation based on a DMRS received on the first time unit and the second time unit.

The specific explanations of the third receiving mode, the fourth receiving mode, the fifth receiving mode, the sixth receiving mode, the first channel estimation mode, the second channel estimation mode, the third channel estimation mode and the fourth channel estimation mode are the same as those of the corresponding modes in the above embodiments, which will not be repeated here.

Embodiment 1: a NR system and a LTE system perform transmission at the same frequency band, and CRSs corresponding to one or more LTE CRS patterns need to be sent continuously. In this embodiment, the terminal receives an RRC signaling sent by the base station. For example, configuration can be realized through a servingCellConfig IE in the RRC signaling. For example, the signaling indicates a PDCCH reception method and/or a PDCCH demodulation method for the terminal, and/or indicates a DMRS reception method and/or a DMRS-based channel estimation mode for the terminal.

In a possible implementation, the first processing mode of the PDCCH is associated with the first processing mode of the DMRS. For example, if the terminal determines that the clean symbol mode is used to receive the PDCCH and/or perform channel estimation, the terminal determines to adopt the puncture mode to receive and/or demodulate the PDCCH.

Embodiment 2: a NR system and a LTE system perform transmission at the same frequency band, and CRSs corresponding to one or more LTE CRS patterns need to be sent continuously. In this embodiment, based on the reported capability, the terminal informs the base station of the first processing mode of the PDCCH supported by the terminal and/or the first processing mode of the DMRS supported by the terminal indicated by a signaling.

In a possible implementation, the terminal reports the supported first processing mode of the PDCCH and/or the supported first processing mode of the DMRS, respectively.

In a possible implementation, the first processing mode of the PDCCH supported by the terminal is associated with the first processing mode of the DMRS. For example, if the terminal capability supports the clean symbol mode to receive the PDCCH and/or perform channel estimation, it is determined that the terminal is capable of receiving and/or demodulating the PDCCH in the puncture mode.

The base station determines the first processing mode of the PDCCH and/or the first processing mode of the DMRS based on the reported terminal capabilities.

Alternatively, the base station sends a second message indicating the first processing mode of the PDCCH and/or the first processing mode of the DMRS based on the reported terminal capabilities.

Embodiment 3: a NR system and a LTE system perform transmission at the same frequency band, and CRSs corresponding to one or more LTE CRS patterns need to be sent continuously. In this embodiment, the first processing mode of the DMRS is associated with the first AL configured by the base station. For example, considering that the quality of channel estimation will be reduced due to the interference of CRS in a case where the terminal adopts the legacy mode for channel estimation, in order to ensure the performance of channel estimation, a larger AL needs to be configured. If the maximum AL in the first ALs configured by the base station is less than or equal to N, the terminal performs channel estimation and/or DMRS reception in a clean symbol mode. If the maximum AL in the first ALs configured by the base station is greater than N, the terminal performs channel estimation and/or DMRS reception in a legacy mode.

The first processing mode of the PDCCH is associated with the AL configured by the base station. For example, if the terminal adopts the legacy mode to receive and/or demodulate the PDCCH, the performance of PDCCH BLER will be reduced due to the interference of CRS. In order to ensure the demodulation performance of PDCCH, it is necessary to configure a larger AL. On the basis, if the maximum AL in the first ALs configured by the base station is less than or equal to N, the terminal performs demodulation and/or reception of PDCCH in a puncture mode. If the maximum AL in the first ALs configured by the base station is greater than N, the terminal performs demodulation and/or reception of PDCCH in a legacy mode.

The first processing mode of the DMRS is associated with the AL configured by the base station. For example, the channel estimation performance corresponding to the clean symbol is reduced in the scene where the terminal moves relatively fast, and thus a larger AL is required to ensure the channel estimation performance. If the maximum AL in the first ALs configured by the base station is less than or equal to N, the terminal performs channel estimation and/or DMRS reception in a legacy mode. Alternatively, if the maximum AL in the first ALs configured by the base station is greater than N, the terminal performs channel estimation and/or DMRS reception in a clean symbol mode.

The first processing mode of the PDCCH is associated with the AL configured by the base station. For example, considering that the terminal adopts the legacy mode to receive and/or demodulate the PDCCH, some advanced terminals can improve the demodulation performance of the corresponding PDCCH through an interference processing mechanism. On the basis, if the maximum AL in the first ALs configured by the base station is less than or equal to N, the terminal adopts the legacy mode to demodulate and/or receive the PDCCH. Alternatively, if the maximum AL in the first ALs configured by the base station is greater than N, the terminal adopts the puncture mode to demodulate and/or receive the PDCCH.

For example, the value of N is determined in a predefined manner. For example, the value of n may be equal to any of the following: 2, 4, 8, 16, and 32.

For example, the value of N may be determined based on the reported terminal capabilities.

For example, the value of N may be determined based on a signaling of the base station.

Corresponding to the aforementioned method embodiments, the disclosure also provides apparatus embodiments.

As illustrated in FIG. 9, FIG. 9 is a block diagram of an information processing apparatus according to an exemplary embodiment. The information processing apparatus is applied to a terminal and includes:
a first determining module 901, configured to determine a first processing mode for processing first downlink information, in which resources corresponding to the first downlink information are overlapped with resources corresponding to a CRS; and
a processing module 902, configured to process the first downlink information based on the first processing mode.

Optionally, the first downlink information includes at least one of:
a PDCCH; or
a DMRS corresponding to the PDCCH; and
the resources corresponding to the first downlink information include:
   resources where PDCCH candidates corresponding to the PDCCH are located.

Optionally, the first downlink information includes the PDCCH, and the first processing mode includes at least one of:
a first receiving mode of receiving the PDCCH only on a first Resource Element (RE), in which the first RE is a RE mapped by the PDCCH but not by the CRS;
a second receiving mode of receiving the PDCCH on the first RE and a second RE, in which the second RE is a RE mapped by the PDCCH and the CRS;
a first demodulation mode of demodulating the PDCCH received only on the first RE; or
a second demodulation mode of demodulating the PDCCH received on the first RE and the second RE.

Optionally, the first downlink information includes the DMRS corresponding to the PDCCH, and the first processing mode includes at least one of:
a third receiving mode of receiving the DMRS only on a third RE, in which the third RE is a RE mapped by the DMRS but not by the CRS;
a fourth receiving mode of receiving the DMRS on the third RE and a fourth RE, in which the fourth RE is a RE mapped by the DMRS and the CRS;
a first channel estimation mode of performing channel estimation based on the DMRS received only on the third RE; or
a second channel estimation mode of performing channel estimation based on the DMRS received on the third RE and the fourth RE.

Optionally, the first downlink information includes the DMRS corresponding to the PDCCH, and the first processing mode includes at least one of:
a fifth receiving mode of receiving the DMRS only on a first time unit, in which the first time unit is a time unit in which the DMRS and the CRS are not overlapped in the frequency domain;
a sixth receiving mode of receiving the DMRS on the first time unit and a second time unit, in which the second time unit is a time unit in which the DMRS and the CRS are overlapped in the frequency domain;
a third channel estimation mode of performing channel estimation based on the DMRS received only in the first time unit; or
a fourth channel estimation mode of performing channel estimation based on the DMRS received in the first time unit and the second time unit.

Optionally, the apparatus further includes:
a first receiving module, configured to receive a first message sent by a base station for determining the first processing mode.

Optionally, the first message is used to indicate:
whether the terminal processes the first downlink information on the conflicting resources in a case where there is a conflict between the resources corresponding to the first downlink information and the resources corresponding to the CRS.

Optionally, whether the terminal processes the first downlink information on the conflicting resources includes at least one of:
whether the terminal receives the PDCCH on the conflicting resources;
whether the terminal demodulates the PDCCH received on the conflicting resources;
whether the terminal receives the DMRS on the conflicting resources; or
whether the terminal performs channel estimation based on the DMRS received on the conflicting resources.

Optionally, the first downlink information includes the PDCCH, and the conflicting resources include conflicting REs; and/or
the first downlink information includes the DMRS corresponding to the PDCCH, and the conflicting resources include any one of:
the conflicting REs; and
all RES corresponding to conflicting symbols.

Optionally, the apparatus further includes:
a first reporting module, configured to report terminal capability information of the terminal for processing the first downlink information to a base station.

Optionally, the first determining module includes:
a first determining sub-module, configured to, in response to determining according to the terminal capability information that there is only one processing mode for processing the first downlink information, determine the processing mode as the first processing mode.

Optionally, the first determining module includes:
a first receiving sub-module, configured to, in response to determining according to the terminal capability information that there are a plurality of processing modes for processing the first downlink information, receive a first message sent by the base station for determining the first processing mode.

Optionally, the first determining module includes:
a second determining sub-module, configured to determine the first processing mode based on a capability of the terminal to process the first downlink information.

The apparatus further includes:
a second reporting module, configured to report the first processing mode to the base station.

Optionally, the apparatus further includes:
a second receiving module, configured to receive association information sent by a base station for determining the first processing mode.

Optionally, the association information is used to indicate first ALs configured by the base station for the terminal.

Optionally, the first determining module includes:
a third determining sub-module, configured to determine a processing mode corresponding to a maximum AL of the first ALs as the first processing mode based on a first correspondence relationship between different ALs corresponding to the first downlink information and different processing modes of the first downlink information.

Optionally, the first determining module includes:
a fourth determining sub-module, configured to determine the first processing mode corresponding to the first downlink information based on a second correspondence relationship among different PDCCH candidates, different ALs and different processing modes, in which the first processing modes corresponding to the first downlink information configured for different PDCCH candidates are different.

As illustrated in FIG. 10, FIG. 10 is a block diagram of an information sending apparatus according to an exemplary embodiment. The information sending apparatus is applied to a terminal and includes:
a second determining module 1001, configured to determine a first processing mode for a terminal to process first downlink information, in which resources corresponding to the first downlink information are overlapped with resources corresponding to a CRS; and
a first sending module 1002, configured to send the first downlink information to the terminal based on the first processing mode.

Optionally, the first downlink information includes at least one of:
a PDCCH; or
a DMRS corresponding to the PDCCH; and
the resources corresponding to the first downlink information, include:
   resources where PDCCH candidates corresponding to the PDCCH are located.

Optionally, the first downlink information includes the PDCCH, and the first processing mode includes at least one of:
a first receiving mode of receiving the PDCCH only on a first Resource Element (RE), in which the first RE is a RE mapped by the PDCCH but not by the CRS;
a second receiving mode of receiving the PDCCH on the first RE and a second RE, in which the second RE is a RE mapped by the PDCCH and the CRS;
a first demodulation mode of demodulating the PDCCH received only on the first RE; or
a second demodulation mode of demodulating the PDCCH received on the first RE and the second RE.

Optionally, the first downlink information includes the DMRS corresponding to the PDCCH, and the first processing mode includes at least one of:
a third receiving mode of receiving the DMRS only on a third RE, in which the third RE is a RE mapped by the DMRS but not by the CRS;
a fourth receiving mode of receiving the DMRS on the third RE and a fourth RE, in which the fourth RE is a RE mapped by the DMRS and the CRS;
a first channel estimation mode of performing channel estimation based on the DMRS received only on the third RE; or
a second channel estimation mode of performing channel estimation based on the DMRS received on the third RE and the fourth RE.

Optionally, the first downlink information includes the DMRS corresponding to the PDCCH, and the first processing mode includes at least one of:
a fifth receiving mode of receiving the DMRS only on a first time unit, in which the first time unit is a time unit in which the DMRS and the CRS are not overlapped in the frequency domain;
a sixth receiving mode of receiving the DMRS on the first time unit and a second time unit, in which the second time unit is a time unit in which the DMRS and the CRS are overlapped in the frequency domain;
a third channel estimation mode of performing channel estimation based on the DMRS received only in the first time unit; or
a fourth channel estimation mode of performing channel estimation based on the DMRS received in the first time unit and the second time unit.

Optionally, the apparatus further includes:
a second sending module, configured to send a first message for determining the first processing mode to the terminal.

Optionally, the first message is used to indicate:
whether the terminal processes the first downlink information on the conflicting resources in a case where there is a conflict between the resources corresponding to the first downlink information and the resources corresponding to the CRS.

Optionally, whether the terminal processes the first downlink information on the conflicting resources includes at least one of:
whether the terminal receives the PDCCH on the conflicting resources;
whether the terminal demodulates the PDCCH received on the conflicting resources;
whether the terminal receives the DMRS on the conflicting resources; or
whether the terminal performs channel estimation based on the DMRS received on the conflicting resources.

Optionally, the first downlink information includes the PDCCH, and the conflicting resources include conflicting REs; and/or
the first downlink information includes the DMRS corresponding to the PDCCH, and the conflicting resources include any one of:
the conflicting REs; and
all RES corresponding to conflicting symbols.

Optionally, the apparatus further includes:
a third receiving module, configured to receive terminal capability information reported by the terminal for processing the first downlink information.

Optionally, the second determining module includes:
a fifth determining sub-module, configured to, in response to determining according to the terminal capability information that there is only one processing mode for the terminal to process the first downlink information, determine the processing mode as the first processing mode.

Optionally, the second determining module includes:
a sixth determining sub-module, configured to, in response to determining according to the terminal capability information that there are a plurality of processing modes for the terminal to process the first downlink information, determine one of the plurality of processing modes as the first processing mode.

The apparatus further includes:
a third sending module, configured to send a first message for determining the first processing mode to the terminal.

Optionally, the second determining module includes:
a second receiving sub-module, configured to receive the first processing mode reported by the terminal, in which the first processing mode is determined by the terminal based on a capability of the terminal to process the first downlink information.

Optionally, the apparatus further includes:
a fourth sending module, configured to send association information for determining the first processing mode to the terminal.

Optionally, the association information is used to indicate first ALs configured by the base station for the terminal.

Optionally, the second determining module includes:
a seventh determining sub-module, configured to determine a processing mode corresponding to a maximum AL of the first ALs as the first processing mode based on a first correspondence relationship between different ALs corresponding to the first downlink information and different processing modes of the first downlink information.

Optionally, the second determining module includes:
an eighth determining sub-module, configured to determine the first processing mode corresponding to the first downlink information based on a second correspondence relationship among different PDCCH candidates, different ALs and different processing modes, in which the first processing modes corresponding to the first downlink information configured for different PDCCH candidates are different.

Optionally, the apparatus further includes:
a third determining module, configured to, in response to a conflict between the resources corresponding to the first downlink information and the resources corresponding to the CRS, determine whether to send the first downlink information to the terminal on the conflicting resources based on the first processing mode.

Since the apparatus embodiments basically correspond to the method embodiments, relevant contents can refer to partial description of the method embodiments. The apparatus embodiments described above are merely schematic, in which the modules described as separate components may or may not be physically separated, and the components shown as modules may or may not be physical modules, i.e., they may be located in one place or may be distributed to a plurality of network elements. Some or all of these modules may be selected according to actual needs to fulfill the purpose of the solution of the embodiments, which can be understood and implemented by those skilled in the art without inventive works.

Correspondingly, the disclosure also provides a computer-readable storage medium. The storage medium stores a computer program, and the computer program is used for executing the information processing method described above performed by the terminal.

Correspondingly, the disclosure also provides a computer-readable storage medium. The storage medium stores a computer program, and the computer program is used for executing the information sending method described above performed by the base station.

Correspondingly, the disclosure also provides an information processing device, including:
a processor; and
a memory for storing instructions executable by the processor;
in which the processor is configured to execute the above information processing method performed by the terminal.

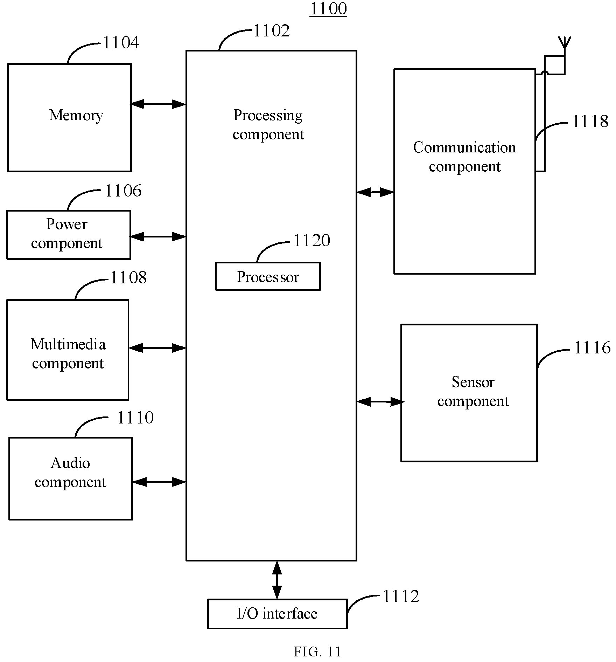

FIG. 11 is a block diagram of an information processing device 1100 according to an exemplary embodiment. For example, the device 1100 may be a mobile phone, a tablet computer, an e-book reader, a multimedia player, a wearable device, a vehicle-mounted user equipment, an iPad, a smart TV and other terminals.

As illustrated in FIG. 11, the device 1100 includes one or more of the following components: a processing component 1102, a memory 1104, a power component 1106, a multimedia component 1108, an audio component 1110, an input/output (I/O) interface 1112, a sensor component 1116, and a communication component 1118.

The processing component 1102 typically controls overall operations of the device 1100, such as operations associated with display, telephone calls, random access of data, camera operations and recording operations. The processing component 1102 may include one or more processors 1120 to perform all or part of the steps in the above described information processing method. Moreover, the processing component 1102 may include one or more modules which facilitate the processing component 1002 to interact with other components. For example, the processing component 1102 may include a multimedia module to facilitate the processing component 1102 to interact with the multimedia component 1108. For another example, the processing component 1102 can read executable instructions from the memory to realize the steps of the information processing method provided by the above embodiments.

The memory 1104 is configured to store various types of data to support the operation of the device 1100. Examples of such data include instructions for any applications or methods operated on the device 1100, contact data, phonebook data, messages, pictures, videos, etc. The memory 1104 may be implemented using any type of volatile or non-volatile storage devices or a combination thereof, such as a Static Random-Access Memory (SRAM), an Electrically-Erasable Programmable Read Only Memory (EEPROM), an Erasable Programmable Read Only Memory (EPROM), a Programmable Read Only Memory (PROM), a Read Only Memory (ROM), a magnetic memory, a flash memory, a magnetic or optical disk.

The power component 1106 provides power to various components of the device 1100. The power component 1106 may include a power management system, one or more power sources, and any other components associated with the generation, management, and distribution of power in the device 1100.

The multimedia component 1108 includes a screen providing an output interface between the device 1100 and the user. In some embodiments, the multimedia component 1108 includes a front-facing camera and/or a rear-facing camera. When the device 1100 is in an operating mode, such as a shooting mode or a video mode, the front-facing camera and/or the rear-facing camera can receive external multimedia data. Each front-facing camera and rear-facing camera may be a fixed optical lens system or has focal length and optical zoom capability.

The audio component 1110 is configured to output and/or input audio signals. For example, the audio component 1110 includes a microphone (MIC) configured to receive external audio signals when the device 1100 is in an operation mode, such as a calling mode, a recording mode, and a voice recognition mode. The received audio signals may be further stored in the memory 1104 or transmitted via the communication component 1118. In some embodiments, the audio component 1110 further includes a speaker to output audio signals.

The I/O interface 1112 provides an interface between the processing component 1102 and peripheral interface modules, such as a keyboard, a click wheel, buttons, and the like. The buttons may include, but are not limited to, a home button, a volume button, a starting button, and a locking button.

The sensor component 1116 includes one or more sensors to provide status assessments of various aspects of the device 1100. For instance, the sensor component 1116 may detect an open/closed status of the device 1100, relative positioning of components, e.g., the display and the keypad, of the device 1100, a change in position of the device 1100 or a component of the device 1100, a presence or absence of user contact with the device 1100, an orientation or an acceleration/deceleration of the device 1100, and a change in temperature of the device 1100. The sensor component 1116 may include a proximity sensor configured to detect the presence of nearby objects without any physical contact. The sensor component 1116 may also include a light sensor, such as a Complementary Metal Oxide Semiconductor (CMOS) or Charge-Coupled Device (CCD) image sensor, for use in imaging applications. In some embodiments, the sensor component 1116 may also include an accelerometer sensor, a gyroscope sensor, a magnetic sensor, a pressure sensor, or a temperature sensor.

The communication component 1118 is configured to facilitate communications, wired or wirelessly, between the device 1100 and other devices. The device 1100 can access a wireless network based on a communication standard, such as Wi-Fi, 2G, 3G, 4G, 5G or 6G, or a combination thereof. In an exemplary embodiment, the communication component 1118 receives a broadcast signal or broadcast association information from an external broadcast management system via a broadcast channel. In an exemplary embodiment, the communication component 1118 further includes a Near Field Communication (NFC) module to facilitate short-range communications. For example, the NFC module may be implemented based on a Radio Frequency Identification (RFID) technology, an Infrared Data Association (IrDA) technology, an Ultra-Wide Band (UWB) technology, a Blue Tooth (BT) technology, and other technologies.

In the exemplary embodiments, the device 1100 may be implemented with one or more Application Specific Integrated Circuits (ASICs), Digital Signal Processors (DSPs), Digital Signal Processing Devices (DSPDs), Programmable Logic Devices (PLDs), Field Programmable Gate Arrays (FPGAs), controllers, micro-controllers, microprocessors or other electronic components, for performing the above described information processing method performed by the terminal.

In an exemplary embodiment, there is also provided a non-transitory machine-readable storage medium including instructions, such as the memory 1104 including instructions. The instructions can be executed by the processor 1120 of the device 1100 to complete the above information processing method. For example, the non-transitory computer-readable storage medium may be a ROM, a random access memory (RAM), a CD-ROM, a magnetic tape, a floppy disk, an optical data storage device, etc.

Correspondingly, the disclosure also provides an information sending device. The device includes:
a processor; and
a memory for storing instructions executable by the processor;
in which the processor is configured to execute the above information sending method performed by the base station.

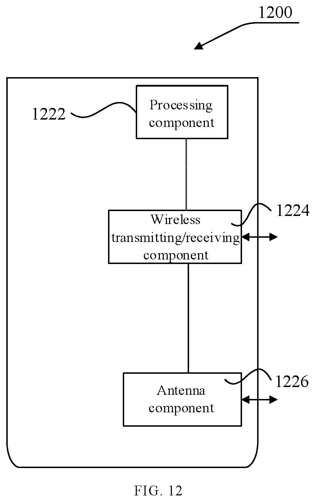

As illustrated in FIG. 12, FIG. 12 is a schematic diagram of an information sending device 1200 according to an exemplary embodiment. The device 1200 may be provided as a base station. As illustrated in FIG. 12, the device 1200 includes a processing component 1222, a wireless transmitting/receiving component 1224, an antenna component 1226, and a signal processing portion specific to a wireless interface. The processing component 1222 may further include at least one processor.

One of the processors in the processing component 1222 is configured to perform the information sending method described above.

Other embodiments of the disclosure will be apparent to those skilled in the art from consideration of the specification and practice of the disclosure disclosed here. The disclosure is intended to cover any variations, usages, or adaptations of the disclosure following the general principles thereof and including such departures from the disclosure as come within known or customary practice in the art. It is intended that the specification and examples are considered as exemplary only, with a true scope and spirit of the disclosure being indicated by the following claims.

It will be appreciated that the disclosure is not limited to the exact construction that has been described above and illustrated in the accompanying drawings, and that various modifications and changes can be made without departing from the scope thereof. It is intended that the scope of the disclosure only be limited by the attached claims.

## Claims

1. An information processing method, performed by a terminal, comprising:
determining a first processing mode for processing first downlink information, wherein resources corresponding to the first downlink information are overlapped with resources corresponding to a Cell-specific Reference Signal (CRS); and
processing the first downlink information based on the first processing mode.

2. The method of claim 1, wherein the first downlink information comprises at least one of:
a Physical Downlink Control Channel (PDCCH); or
a Demodulation Reference Signal (DMRS) corresponding to the PDCCH; and
wherein the resources corresponding to the first downlink information comprise:
resources where PDCCH candidates corresponding to the PDCCH are located.

3. The method of claim 2, wherein the first downlink information comprises the PDCCH, and the first processing mode comprises at least one of:
a first receiving mode of receiving the PDCCH only on a first Resource Element (RE), wherein the first RE is a RE mapped by the PDCCH but not by the CRS;
a second receiving mode of receiving the PDCCH on the first RE and a second RE, wherein the second RE is a RE mapped by the PDCCH and the CRS;
a first demodulation mode of demodulating the PDCCH received only on the first RE; or
a second demodulation mode of demodulating the PDCCH received on the first RE and the second RE.

4. The method of claim 2, wherein the first downlink information comprises the DMRS corresponding to the PDCCH, and the first processing mode comprises at least one of:
a third receiving mode of receiving the DMRS only on a third RE, wherein the third RE is a RE mapped by the DMRS but not by the CRS;
a fourth receiving mode of receiving the DMRS on the third RE and a fourth RE, wherein the fourth RE is a RE mapped by the DMRS and the CRS;
a first channel estimation mode of performing channel estimation based on the DMRS received only on the third RE; or
a second channel estimation mode of performing channel estimation based on the DMRS received on the third RE and the fourth RE.

5. The method of claim 2, wherein the first downlink information comprises the DMRS corresponding to the PDCCH, and the first processing mode comprises at least one of:
a fifth receiving mode of receiving the DMRS only on a first time unit, wherein the first time unit is a time unit where the DMRS and the CRS are not overlapped in frequency domain;
a sixth receiving mode of receiving the DMRS on the first time unit and a second time unit, wherein the second time unit is a time unit where the DMRS and the CRS are overlapped in the frequency domain;
a third channel estimation mode of performing channel estimation based on the DMRS received only on the first time unit; or
a fourth channel estimation mode of performing channel estimation based on the DMRS received on the first time unit and the second time unit.

6. The method of any one of claims 1-5, further comprising:
receiving a first message sent by a base station for determining the first processing mode.

7. The method of claim 6, wherein the first message is used to indicate:
whether the terminal processes the first downlink information on conflicting resources in a case where there is a conflict between the resources corresponding to the first downlink information and the resources corresponding to the CRS.

8. The method of claim 7, wherein whether the terminal processes the first downlink information on the conflicting resources comprises at least one of:
whether the terminal receives the PDCCH on the conflicting resources;
whether the terminal demodulates the PDCCH received on the conflicting resources;
whether the terminal receives the DMRS on the conflicting resources; or
whether the terminal performs channel estimation based on the DMRS received on the conflicting resources.

9. The method of claim 8, wherein the first downlink information comprises the PDCCH, and the conflicting resources comprise conflicting REs; and/or
the first downlink information comprises the DMRS corresponding to the PDCCH, and the conflicting resources comprise any one of:
the conflicting REs; and
all REs corresponding to conflicting symbols.

10. The method of any one of claims 1-5, further comprising:
reporting terminal capability information of the terminal for processing the first downlink information to a base station.

11. The method of claim 10, wherein determining the first processing mode for processing the first downlink information comprises:
in response to determining according to the terminal capability information that there is only one processing mode for processing the first downlink information, determining the one processing mode as the first processing mode.

12. The method of claim 10, further comprising:
in response to determining according to the terminal capability information that there are a plurality of processing modes for processing the first downlink information, receiving a first message sent by the base station for determining the first processing mode.

13. The method of any one of claims 1-5, wherein determining the first processing mode for processing the first downlink information comprises:
determining the first processing mode based on a capability of the terminal to process the first downlink information; and
the method further comprising:
reporting the first processing mode to a base station.

14. The method of any one of claims 1-5, further comprising:
receiving association information sent by a base station for determining the first processing mode.

15. The method of claim 14, wherein the association information is used to indicate first aggregation levels configured by the base station for the terminal.

16. The method of claim 14, wherein determining the first processing mode for processing the first downlink information comprises:
determining a processing mode corresponding to a maximum aggregation level of the first aggregation levels as the first processing mode based on a first correspondence relationship between different aggregation levels corresponding to the first downlink information and different processing modes of the first downlink information.

17. The method of claim 14, wherein determining the first processing mode for processing the first downlink information comprises:
determining the first processing mode corresponding to the first downlink information based on a second correspondence relationship among different PDCCH candidates, different aggregation levels and different processing modes, wherein the first processing modes corresponding to the first downlink information configured for different PDCCH candidates are different.

18. An information sending method, performed by a base station, comprising:
determining a first processing mode for a terminal to process first downlink information, wherein resources corresponding to the first downlink information are overlapped with resources corresponding to a Cell-specific Reference Signal (CRS); and
sending the first downlink information to the terminal based on the first processing mode.

19. The method of claim 18, wherein the first downlink information comprises at least one of:
a Physical Downlink Control Channel (PDCCH); or
a Demodulation Reference Signal (DMRS) corresponding to the PDCCH; and
wherein the resources corresponding to the first downlink information comprise:
resources where PDCCH candidates corresponding to the PDCCH are located.

20. The method of claim 19, wherein the first downlink information comprises the PDCCH, and the first processing mode comprises at least one of:
a first receiving mode of receiving the PDCCH only on a first Resource Element (RE), wherein the first RE is a RE mapped by the PDCCH but not by the CRS;
a second receiving mode of receiving the PDCCH on the first RE and a second RE, wherein the second RE is a RE mapped by the PDCCH and the CRS;
a first demodulation mode of demodulating the PDCCH received only on the first RE; or
a second demodulation mode of demodulating the PDCCH received on the first RE and the second RE.

21. The method of claim 19, wherein the first downlink information comprises the DMRS corresponding to the PDCCH, and the first processing mode comprises at least one of:
a third receiving mode of receiving the DMRS only on a third RE, wherein the third RE is a RE mapped by the DMRS but not by the CRS;
a fourth receiving mode of receiving the DMRS on the third RE and a fourth RE, wherein the fourth RE is a RE mapped by the DMRS and the CRS;
a first channel estimation mode of performing channel estimation based on the DMRS received only on the third RE; or
a second channel estimation mode of performing channel estimation based on the DMRS received on the third RE and the fourth RE.

22. The method of claim 19, wherein the first downlink information comprises the DMRS corresponding to the PDCCH, and the first processing mode comprises at least one of:
a fifth receiving mode of receiving the DMRS only on a first time unit, wherein the first time unit is a time unit where the DMRS and the CRS are not overlapped in the frequency domain;
a sixth receiving mode of receiving the DMRS on the first time unit and a second time unit, wherein the second time unit is a time unit where the DMRS and the CRS are overlapped in the frequency domain;
a third channel estimation mode of performing channel estimation based on the DMRS received only on the first time unit; or
a fourth channel estimation mode of performing channel estimation based on the DMRS received on the first time unit and the second time unit.

23. The method of any one of claims 18-22, further comprising:
sending a first message for determining the first processing mode to the terminal.

24. The method of claim 23, wherein the first message is used to indicate:
whether the terminal processes the first downlink information on conflicting resources in a case where there is a conflict between the resources corresponding to the first downlink information and the resources corresponding to the CRS.

25. The method of claim 24, wherein whether the terminal processes the first downlink information on the conflicting resources comprises at least one of:
whether the terminal receives the PDCCH on the conflicting resources;
whether the terminal demodulates the PDCCH received on the conflicting resources;
whether the terminal receives the DMRS on the conflicting resources; or
whether the terminal performs channel estimation based on the DMRS received on the conflicting resources.

26. The method of claim 25, wherein the first downlink information comprises the PDCCH, and the conflicting resources comprise conflicting REs; and/or
the first downlink information comprises the DMRS corresponding to the PDCCH, and the conflicting resources comprise any one of:
the conflicting REs; and
all REs corresponding to conflicting symbols.

27. The method of any one of claims 18-22, further comprising:
receiving terminal capability information reported by the terminal for processing the first downlink information.

28. The method of claim 27, wherein determining the first processing mode for the terminal to process the first downlink information comprises:
in response to determining according to the terminal capability information that there is only one processing mode for the terminal to process the first downlink information, determining the one processing mode as the first processing mode.

29. The method of claim 27, wherein determining the first processing mode for the terminal to process the first downlink information comprises:
in response to determining according to the terminal capability information that there are a plurality of processing modes for the terminal to process the first downlink information, determining one of the plurality of processing modes as the first processing mode; and
the method further comprising:
sending a first message for determining the first processing mode to the terminal.

30. The method of any one of claims 18-22, wherein determining the first processing mode for the terminal to process the first downlink information comprises:
receiving the first processing mode reported by the terminal, wherein the first processing mode is determined by the terminal based on a capability of the terminal to process the first downlink information.

31. The method of any one of claims 18-22, further comprising:
sending association information for determining the first processing mode to the terminal.

32. The method of claim 31, wherein the association information is used to indicate first aggregation levels configured by the base station for the terminal.

33. The method of claim 32, wherein determining the first processing mode for the terminal to process the first downlink information comprises:
determining a processing mode corresponding to a maximum aggregation level of the first aggregation levels as the first processing mode based on a first correspondence relationship between different aggregation levels corresponding to the first downlink information and different processing modes of the first downlink information.

34. The method of claim 32, wherein determining the first processing mode for the terminal to process the first downlink information comprises:
determining the first processing mode corresponding to the first downlink information based on a second correspondence relationship among different PDCCH candidates, different aggregation levels and different processing modes, wherein the first processing modes corresponding to the first downlink information configured for different PDCCH candidates are different.

35. The method of claim 18, further comprising:
determining based on the first processing mode whether to send the first downlink information to the terminal on conflicting resources, in a case where there is a conflict between the resources corresponding to the first downlink information and the resources corresponding to the CRS.

36. An information processing apparatus, applied to a terminal, comprising:
a first determining module, configured to determine a first processing mode for processing first downlink information, wherein resources corresponding to the first downlink information are overlapped with resources corresponding to a Cell-specific Reference Signal (CRS); and
a processing module, configured to process the first downlink information based on the first processing mode.

37. An information sending apparatus, applied to a base station, comprising:
a second determining module, configured to determine a first processing mode for a terminal to process first downlink information, wherein resources corresponding to the first downlink information are overlapped with resources corresponding to a Cell-specific Reference Signal (CRS); and
a first sending module, configured to send the first downlink information to the terminal based on the first processing mode.

38. A computer-readable storage medium, wherein the storage medium stores a computer program, and the computer program is configured to execute the information processing method of any one of claims 1-17.

39. A computer-readable storage medium, wherein the storage medium stores a computer program, and the computer program is configured to execute the information sending method of any one of claims 18-35.

40. An information processing device, comprising:
a processor; and
a memory for storing instructions executable by the processor;
wherein the processor is configured to execute the information processing method according to any one of claims 1-17.

41. An information sending device, comprising:
a processor; and
a memory for storing instructions executable by the processor;
wherein the processor is configured to execute the information sending method according to any one of claims 18-35.
